# EUROPEAN PATENT APPLICATION

(11) **EP 4 415 404 A1**
(43) Date of publication of application: **14.08.2024**
(21) Application number: 22885218.2
(22) Date of filing: 21.07.2022
(51) Int. Cl.: H04W 8/20

(54) **NETWORK CAPABILITY EXPOSURE METHOD, APPARATUS, AND SYSTEM**

(30) Priority: 29.10.2021 CN 202111274289
(71) Applicant: Huawei Technologies Co., Ltd., Shenzhen, Guangdong 518129 (CN)
(72) Inventor: ZHU, Qianghua, Shenzhen, Guangdong 518129 (CN); LI, Wenzheng, Shenzhen, Guangdong 518129 (CN); WU, Wenfu, Shenzhen, Guangdong 518129 (CN)
(74) Representative: Gill Jennings & Every LLP
(86) International application number: PCT/CN2022/107021
(87) International publication number: WO 2023/071316

(57) **Abstract**

This application provides a network capability exposure method, an apparatus, and a system. The method includes: An application network element sends a first message used to request to update or store service information that is of a hosting network and that is subscribed to by terminal equipment. A network exposure network element sends a second message to request a first network element to update or store the service information that is of the hosting network and that is subscribed to by the terminal equipment. The first network element updates or stores the service information that is of the hosting network and that is subscribed to by the terminal equipment, and configures the information for the terminal equipment. The method, apparatus, and system in this application implements, using a capability of the network exposure network element, local configuration of the terminal equipment and configuration and update of the subscribed service information of the hosting network of subscription data of the terminal equipment in a network, to facilitate the terminal equipment to subsequently access the network and access a corresponding service of the hosting network.

## Description

This application claims priority to Chinese Patent Application No. 202111274289.2, filed with the China National Intellectual Property Administration on October 29, 2021 and entitled "NETWORK CAPABILITY EXPOSURE METHOD, APPARATUS, AND SYSTEM", which is incorporated herein by reference in its entirety.

### TECHNICAL FIELD

This application relates to the communication field, and specifically, to a network capability exposure method, an apparatus, and a system.

### BACKGROUND

Currently, 2G, 3G, and 4G mobile networks can provide service data transmission channels for call services, video services, web page services, and the like of terminal equipment (terminal equipment, TE). However, with the explosive development of new services such as internet of vehicles, virtual reality, mobile office, and internet of things, a mobile network is required to provide a consistent service across a variety of scenarios including cases of fiber-like access rate, zero-latency user experience while connecting hundreds of billions of devices, ultra-high traffic density, ultra-high connection density, and ultra-high mobility. Conventional networks lack intelligent optimization based on service and user awareness, energy efficiency improvement by over 100 times, and bit cost reduction, and therefore cannot ensure rapid development of future services.

5G networks can serve as, by virtue of high speed, low latency, and ubiquitous network enable, a hosting network (hosting network) in the future to provide access to localized services (provide access to localized services, PALS) for users or devices. For example, a non-public network (non-public network, NPN) is deployed in a stadium to provide a local live video service for viewers as a PALS service. After purchasing tickets, users can find and select the NPN network at specific time and a specific location. After the PALS service authenticates and authorizes access of terminal equipment, the terminal equipment is allowed to establish a user-plane connection to receive live data. A hosting network may be set in a theme park, a sports venue, an international venue, and the like. After moving to an area of the hosting network, terminal equipment that subscribes to a PALS service can temporarily access the hosting network at specific time and a specific place to access a specific PALS service.

How to enable the terminal equipment to access the hosting network and access a service of the hosting network after subscribing to the service of the hosting network is a problem to be urgently resolved.

### SUMMARY

This application provides a network capability exposure method, an apparatus, and a system, so that terminal equipment can access a hosting network and use a service in the hosting network.

According to a first aspect, a network capability exposure method is provided. The method may be performed by an application network element, or may be performed by a chip or a circuit used in the application network element. This is not limited in this application. For ease of description, the following uses an example in which the method is performed by the application network element for description.

### The method includes:

The application network element sends a first message to a network exposure network element, where the first message is used to request to update or store service information that is of a hosting network and that is subscribed to by terminal equipment, and the first message includes the service information; and
the application network element receives an indication message sent by the network exposure network element, where the indication message indicates whether to update or store the service information.

In a possible implementation, the application network element receives a first response message that is sent by the network exposure network element in response to the first message, where the first response message indicates whether to update or store the service information.

According to the foregoing technical solution, the network exposure network element exposes a capability of a network to a third party, and the application network element sends, to the hosting network or a home network, the service information that is of the hosting network and that is subscribed to by the terminal equipment. This prepares for subsequent configuration of the terminal equipment and configuration of subscription profile of the terminal equipment in the network.

With reference to the first aspect, in some implementations of the first aspect, the service information includes one or more of the following information: a service description, a service parameter, an authentication mode, an access mode, effective time, an effective area, and a service credential.

The service description identifies a service that the terminal equipment accesses the hosting network.

The service parameter indicates a related network parameter of the service that the terminal equipment accesses the hosting network.

The authentication mode indicates an authentication or authorization method for the service that the terminal equipment accesses the hosting network.

The access mode indicates a routing manner of the service that the terminal equipment accesses the hosting network.

The effective time indicates time information that the terminal equipment can use the service of the hosting network.

The effective area indicates location information that the terminal equipment can use the service of the hosting network.

The service credential is used to authenticate the service that the terminal equipment accesses the hosting network.

In a possible implementation, the service description includes one or more of the following: a service identifier, a service type, a service name, a service provider, and a service introduction.

In a possible implementation, the service parameter includes one or more of the following: a data network name, single network slice selection assistance information, and a traffic type.

In a possible implementation, the authentication mode may include one or more of the following: first-time authentication, secondary slice authentication, secondary service authentication, secondary session authentication, and application layer authentication.

In a possible implementation, the access mode includes one or more of the following: local breakout and home routed, an overlay mode, an underlay mode and a dual registration mode.

According to the foregoing technical solution, the network exposure network element exposes a capability of a network to a third party, and the application network element sends the service information, to the hosting network or the home network, the service information, such as the service description, the service parameter, the authentication mode, the access mode, and the effective time, that is of the hosting network and that is subscribed to by the terminal equipment. This makes preparations for subsequent configuration of the terminal equipment and configuration of subscription profile of the terminal equipment in the hosting network or the home network.

With reference to the first aspect, in some implementations of the first aspect, the authentication mode further includes an address of an authentication server, and the authentication server is configured to perform service authentication.

With reference to the first aspect, in some implementations of the first aspect, the access mode is an overlay mode and an underlay mode, and the access mode further includes an address of a non-3GPP interworking function network element.

With reference to the first aspect, in some implementations of the first aspect, the first message may further include identification information of the terminal equipment, the identification information identifies the terminal equipment that subscribes to a function service of the hosting network.

For example, the UE identification information may be any one of a generic public subscription identifier, an internet protocol address, a media access control address and a group identifier. When the terminal equipment is mobile equipment, the identification information of the terminal equipment may be the GPSI.

According to the foregoing technical solution, the application network element sends, to the hosting network or the home network, first information that includes the identification information of the terminal equipment and the service information that is of the hosting network and that is subscribed to by the terminal equipment. This facilitates subsequent configuration of terminal equipment and configuration of subscription profile of terminal equipment in the hosting network or the home network for different types of terminal equipment.

With reference to the first aspect, in some implementations of the first aspect, the first message further includes a subscription permanent identifier and a network access credential, the subscription permanent identifier and the network access credential are used to perform initial authentication on the terminal equipment to access the hosting network.

According to the foregoing technical solution, the first message including the subscription permanent identifier and the network access credential is sent to the hosting network or the home network, so that the terminal equipment subsequently accesses the hosting network to perform initial authentication and further obtains a service of the hosting network.

With reference to the first aspect, in some implementations of the first aspect, the first message further includes network selection information, and the network selection information is used by the terminal equipment to select the hosting network.

In a possible implementation, the network selection information includes a preferred hosting network identifier list or a preferred GIN list.

For example, the network selection information may be any one of a PLMN ID and an NID, a PLMN ID, and a PLMN ID and a CAG ID.

According to the foregoing technical solution, the first message including the network selection information is sent to the hosting network or the home network, so that the terminal equipment subsequently accesses the hosting network to perform network selection and obtains a service of the hosting network.

With reference to the first aspect, in some implementations of the first aspect, the application network element obtains the service information before sending the first message.

In a possible implementation, after the terminal equipment queries the service of the hosting network, the application network element obtains the service information that is of the hosting network and that is subscribed to by the terminal equipment.

For example, before moving to the hosting network, the terminal equipment queries the service of the hosting network by accessing a mobile network or wireless fidelity (wireless fidelity, Wi-Fi). After the terminal equipment queries the service of the hosting network, the application network element obtains the service information that is of the hosting network and that is subscribed to by the terminal equipment.

According to the foregoing technical solution, the application network element obtains the service information that is of the hosting network and that is subscribed to by the terminal equipment. Herein, the service information of the hosting network that is obtained by the application network element and that is subscribed to by the terminal equipment may provide an information source for subsequently updating information in the terminal equipment and the network.

With reference to the first aspect, in some implementations of the first aspect, before sending the first message, the application network element obtains one or more of the following information: identification information of the terminal equipment, information about the hosting network, cooperation model, the subscription permanent identifier, the network access credential, and the network selection information.

According to the foregoing technical solution, before sending the first message, the application network element obtains information related to the service information that is of the hosting network and that is subscribed to by the terminal equipment. The related information helps configure the service information of the hosting network for the terminal equipment. This helps complete operations such as network selection, registration, and authentication in a process in which the terminal equipment accesses the hosting network.

It should be noted that, for terminal equipment in the cooperation model, the hosting network does not need to create a new subscription for the terminal equipment, and only needs to use an existing subscription permanent identifier.

Optionally, the application network element receives an authentication request message of the terminal equipment sent by the authentication server, where the authentication request message of the terminal equipment includes location information and/or time information of the terminal equipment, and the authentication server is located in the hosting network. The application network element performs access authentication on access of the terminal equipment to the hosting network based on the effective time and the effective area in the service information that is subscribed to by the terminal equipment and that is of the hosting network. The application network element determines whether to reject a terminal equipment authentication request.

According to the foregoing technical solution, the application network element may obtain the time information and/or the location information of the terminal equipment from the authentication server, and complete authentication on the authentication request of the terminal equipment based on the information, and this provides an optional access authentication manner for the terminal equipment.

With reference to the first aspect, in some implementations of the first aspect, the application network element configures the service information for the terminal equipment in a control plane manner or user plane manner.

For example, the application network element may configure, for the terminal equipment in a control plane manner, the service information that is of the hosting network and that is subscribed to by the terminal equipment, or may configure, for the terminal equipment in a user plane manner, the service information that is of the hosting network and that is subscribed to by the terminal equipment.

According to the foregoing technical solution, the service information that is of the hosting network and that is subscribed to by the terminal equipment is configured on the terminal equipment, and information configuration at the terminal equipment end is completed.

According to a second aspect, a network capability exposure method is provided. The method may be performed by a network exposure network element, or may be performed by a chip or a circuit used by a network exposure network element. This is not limited in this application. For ease of description, the following uses an example in which the method is performed by the network exposure network element for description.

### The method includes:

The network exposure network element receives a first message sent by an application network element, where the first message is used to request to update or store service information that is of a hosting network and that is subscribed to by terminal equipment, and the first message includes the service information.

The network exposure network element sends a second message to a first network element, where the second message is used to request to update or create subscription profile of the terminal equipment, and the second message includes the service information.

In a possible implementation, the first network element is a unified data management network element or a unified data repository network element.

According to the foregoing technical solution, the network exposure network element receives, via a capability of exposing a network function to a third party, the first message that is sent by the application network element and that is used to request to update or store the service information that is of the hosting network and that is subscribed to by the terminal equipment, and sends, to the first network element, the second message that is used to request to update or create the subscription profile of the terminal equipment. Based on the second message, the unified data management network element or the unified data repository network element may enable the subscription profile of the terminal equipment to include the service information that is of the hosting network and that is subscribed to by the terminal equipment, so that update of the service information that is of the hosting network and that is subscribed to by the terminal equipment is implemented in the subscription profile of the terminal equipment.

With reference to the second aspect, in some implementations of the second aspect, before sending the second message to the first network element, the network exposure network element authenticates, according to a service protocol, the first message sent by the application network element, and the network exposure network element sends the second message to the first network element after the authentication succeeds.

It should be noted that, when a service provider of the hosting network is a home network of the terminal equipment, a network exposure network element of the home network receives the first message sent by the application network element. Before sending the second message to the first network element, the network exposure network element performs authentication and authorization on a request of the application network element according to the cooperation agreement, and the network exposure network element sends the second message to the first network element after the authentication succeeds.

It should be further noted that the cooperation agreement herein may also be referred to as a business agreement, a service agreement, a roaming agreement, a service agreement, or a service level agreement, and is generally locally configured.

With reference to the second aspect, in some implementations of the second aspect, the service information includes one or more of the following information: a service description, a service parameter, an authentication mode, an access mode, effective time, an effective area, and a service credential.

The service description identifies a service that the terminal equipment accesses the hosting network.

The service parameter indicates a related network parameter of the service that the terminal equipment accesses the hosting network.

The authentication mode indicates an authentication or authorization method for the service that the terminal equipment accesses the hosting network.

The access mode indicates a routing manner of the service that the terminal equipment accesses the hosting network.

The effective time indicates time information that the terminal equipment can use the service of the hosting network.

The effective area indicates location information that the terminal equipment can use the service of the hosting network.

The service credential is used to authenticate the service that the terminal equipment accesses the hosting network.

In a possible implementation, the service description includes one or more of the following: a service identifier, a service type, a service name, a service provider, and a service introduction.

In a possible implementation, the service parameter includes one or more of the following: a data network name, single network slice selection assistance information, and a traffic type.

In a possible implementation, the authentication mode includes one or more of the following: first-time authentication, secondary slice authentication, secondary service authentication, secondary session authentication, and application layer authentication.

In a possible implementation, the access mode includes one or more of the following: local breakout and home routed, an overlay mode, an underlay mode and a dual registration mode.

With reference to the second aspect, in some implementations of the second aspect, the authentication mode further includes an address of an authentication server, and the authentication server is configured to perform service authentication.

With reference to the second aspect, in some implementations of the second aspect, the access mode is an overlay mode and an underlay mode, and the access mode further includes an address of a non-3GPP interworking function.

According to the foregoing technical solution, the network exposure network element exposes a capability of a network to a third party, and the application network element sends the service information, to the first network element, such as the service description, the service parameter, the authentication mode, the access mode, and the effective time, that is of the hosting network and that is subscribed to by the terminal equipment. Therefore, the first network element may update or create the subscription profile of the terminal equipment, and further prepare subsequent configuration of the terminal equipment.

With reference to the second aspect, in some implementations of the second aspect, the first message may further include identification information of the terminal equipment, the identification information identifies the terminal equipment that subscribes to a function service of the hosting network, and the second message further includes the identification information.

For example, the UE identification information may be any one of a generic public subscription identifier, an internet protocol address, a media access control address and a group identifier. When the terminal equipment is mobile equipment, the identification information of the terminal equipment may be the GPSI.

According to the foregoing technical solution, the application network element sends, to the first network element, first information that includes the identification information of the terminal equipment and the service information that is of the hosting network and that is subscribed to by the terminal equipment, to prepare for subsequent update or creation of subscription profile and configuration of the terminal equipment for different types of terminal equipment.

With reference to the second aspect, in some implementations of the second aspect, the first message further includes a subscription permanent identifier and a network access credential, the subscription permanent identifier and the network access credential are used to perform initial authentication on the terminal equipment to access the hosting network, and the second message further includes the subscription permanent identifier and the network access credential.

According to the foregoing technical solution, the network exposure network element receives the first message that includes the subscription permanent identifier and the network access credential, and sends the second message to enable the first network element to obtain the subscription permanent identifier, the network access credential, and the service information of the terminal equipment. This helps the terminal equipment subsequently access the hosting network to perform initial authentication and further obtain a service of the hosting network.

With reference to the second aspect, in some implementations of the second aspect, the first message further includes network selection information, the network selection information is used by the terminal equipment to select the hosting network, and the second message further includes the network selection information.

In a possible implementation, the network selection information includes a preferred hosting network identifier list or a preferred GIN list.

For example, the network selection information may be any one of a PLMN ID and an NID, a PLMN ID, and a PLMN ID and a CAG ID.

According to the foregoing technical solution, the network exposure network element receives the first message including the network selection information, and sends the network selection information and the like to the first network element via the second message, so that the terminal equipment subsequently accesses the hosting network to perform network selection, and then obtains a service of the hosting network.

With reference to the second aspect, in some implementations of the second aspect, when the second message is used to request to create the subscription profile of the terminal equipment, the second message further includes the subscription permanent identifier and the network access credential.

With reference to the second aspect, in some implementations of the second aspect, the network exposure network element is located in the hosting network or the home network of the terminal equipment.

According to a third aspect, a network capability exposure method is provided. The method may be performed by a first network element, or may be performed by a chip or a circuit used by the first network element. This is not limited in this application. For ease of description, the following uses an example in which the method is performed by the first network element for description.

### The method includes:

The first network element receives a second message sent by a network exposure network element, where the second message is used to request to update or create subscription profile of terminal equipment, the second message includes service information that is of a hosting network and that is subscribed to by the terminal equipment, and the first network element is a unified data management network element or a unified data repository network element; and
the first network element updates or creates the subscription profile of the terminal equipment, where the subscription profile of the terminal equipment includes the service information.

According to the foregoing technical solution, the unified data management network element or the unified data repository network element receives the second message, and enables, based on the second message, the subscription profile of the terminal equipment to include the service information that is of the hosting network and that is subscribed to by the terminal equipment. Updated subscription profile of the terminal equipment may be used to configure the service information of the hosting network for the terminal equipment, and may further be used to perform service authentication on terminal equipment that accesses the hosting network.

With reference to the third aspect, in some implementations of the third aspect, the service information includes one or more of the following information: a service description, a service parameter, an authentication mode, an access mode, effective time, an effective area, and a service credential.

The service description identifies a service that the terminal equipment accesses the hosting network.

The service parameter indicates a related network parameter of the service that the terminal equipment accesses the hosting network.

The authentication mode indicates an authentication or authorization method for the service that the terminal equipment accesses the hosting network.

The access mode indicates a routing manner of the service that the terminal equipment accesses the hosting network.

The effective time indicates time information that the terminal equipment can use the service of the hosting network.

The effective area indicates location information that the terminal equipment can use the service of the hosting network.

The service credential is used to authenticate the service that the terminal equipment accesses the hosting network.

In a possible implementation, the service description includes one or more of the following: a service identifier, a service type, a service name, a service provider, and a service introduction.

In a possible implementation, the service parameter includes one or more of the following: a data network name, single network slice selection assistance information, and a traffic type.

In a possible implementation, the authentication mode may include one or more of the following: first-time authentication, secondary slice authentication, secondary service authentication, secondary session authentication, and application layer authentication.

In a possible implementation, the access mode includes one or more of the following: local breakout and home routed, an overlay mode, an underlay mode and a dual registration mode.

With reference to the third aspect, in some implementations of the third aspect, the authentication mode further includes an address of an authentication server, and the authentication server is configured to perform service authentication.

With reference to the third aspect, in some implementations of the third aspect, the access mode is an overlay mode and an underlay mode, and the access mode further includes an address of a non-3GPP interworking function network element.

According to the foregoing technical solution, the first network element updates or creates subscription profile for the terminal equipment based on the second message that includes service information, such as a service description, a service parameter, an authentication mode, an access mode, and effective time, that is of the hosting network and that is subscribed to by the terminal equipment. New subscription profile of the terminal equipment may be used to configure the service information of the hosting network for the terminal equipment, and may further be used to perform service authentication on terminal equipment that accesses the hosting network.

With reference to the third aspect, in some implementations of the third aspect, when the second message is used to request to create the subscription profile of the terminal equipment, the second message further includes the subscription permanent identifier and the network access credential.

With reference to the third aspect, in some implementations of the third aspect, the second message further includes network selection information, the network selection information is used by the terminal equipment to select a hosting network, and the network selection information includes a preferred hosting network identifier list or a preferred GIN list; and the first network element configures the service information and/or the network selection information for the terminal equipment in a control plane manner.

For example, the network selection information may be any one of a PLMN ID and an NID, a PLMN ID, and a PLMN ID and a CAG ID.

According to the foregoing technical solution, the first network element may perform network selection for the terminal equipment to subsequently access the hosting network based on the network selection information of the terminal equipment that is included in the second message, to obtain the service of the hosting network.

With reference to the third aspect, in some implementations of the third aspect, the first network element is a unified data management network element, and the first network element receives a terminal equipment authentication request message sent by an authentication server; and
the first network element determines, based on the effective time in the service information, whether to reject a terminal equipment authentication request, where the authentication request message includes the time information of the terminal equipment; or
the first network element determines, based on the effective area in the service information, whether to reject a terminal equipment authentication request, where the authentication request message includes the location information of the terminal equipment; or
the first network element determines, based on the effective time and/or the effective area in the service information, whether to reject a terminal equipment authentication request, where the authentication request message includes the time information and the location information of the terminal equipment.

According to the foregoing technical solution, the first network element may implement authentication on access of the terminal equipment.

With reference to the third aspect, in some implementations of the third aspect, the first network element is a unified data management network element, and the first network element sends a third message to the authentication server, where the third message is used to assist the authentication server in performing access authentication on access of the terminal equipment to the hosting network; and the third message includes effective time and an effective area in the service information.

According to the foregoing technical solution, the first network element sends, to the authentication server, third information that includes the effective area and effective time in the service information that is of the hosting network and that is subscribed to by the terminal equipment, where the third information helps the authentication server authenticate access of the terminal equipment.

With reference to the third aspect, in some implementations of the third aspect, the first network element is located in the hosting network or the home network of the terminal equipment.

According to a fourth aspect, a network capability exposure method is provided. The method may be performed by an authentication server, or may be performed by a chip or a circuit used by the authentication server. This is not limited in this application. For ease of description, the following uses an example in which the method is performed by the authentication server for description.

### The method includes:

The authentication server receives a terminal equipment authentication request message sent by an access management network element, where the terminal equipment authentication request message includes time information and/or location information of terminal equipment, and the access management network element is located in a hosting network.

The authentication server sends the terminal equipment authentication request message to a unified data management network element; and the authentication server receives a third message sent by the unified data management network element, where the third message is used to assist the authentication server in authenticating that the terminal equipment accesses the hosting network, and the third message includes service information that is of the hosting network and that is subscribed to by the terminal equipment.

The authentication server determines whether to reject a terminal equipment authentication request.

According to the foregoing technical solution, the authentication server may authenticate access of the terminal equipment with reference to the received third message.

With reference to the fourth aspect, in some implementations of the fourth aspect, the authentication server determines, based on effective time and an effective area included in the service information, whether to reject the terminal equipment authentication request, where the service information includes the effective time and/or the effective area.

According to the foregoing technical solution, the authentication server may authenticate the terminal equipment with reference to the effective time and/or the effective area included in the third message and that are/is of the hosting network service and that are/is subscribed to by the terminal equipment, and determine whether to reject the terminal equipment authentication request.

With reference to the fourth aspect, in some implementations of the fourth aspect, the authentication server is located in the hosting network or the home network of the terminal equipment.

According to a fifth aspect, a network capability exposure method is provided, including:
terminal equipment configures service information or network selection information that is of a hosting network and that is subscribed to by the terminal equipment and that is sent by an application network element by using a user plane or a control plane; or
the terminal equipment configures the service information or the network selection information that is of the hosting network and that is subscribed to by the terminal equipment and that is sent by the first network element by using the control plane; and
the terminal equipment selects and registers with the hosting network based on configured service information or network selection information, and establishes a PDU session in the hosting network to access a subscribed service of the hosting network.

With reference to the fifth aspect, in some implementations of the fifth aspect, the terminal equipment may be one or more of the following: a local subscribed user of the hosting network, a partner user that has a cooperation agreement with the hosting network, and a non-partner user that has no cooperation agreement with the hosting network.

According to a sixth aspect, a communication system is provided, including an application network element, a network exposure network element, a first network element, and an authentication server. The application network element is configured to perform the method in the first aspect or any possible implementation of the first aspect. The network exposure network element is configured to perform the method in the second aspect or any possible implementation of the second aspect. The first network element is configured to perform the method in the third aspect or any possible implementation of the third aspect, and the authentication server is configured to perform the method in the fourth aspect or any possible implementation of the fourth aspect.

According to a seventh aspect, a communication apparatus is provided, and the communication apparatus has a function of implementing the method in the first aspect or any possible implementation of the first aspect. The function may be implemented by hardware, or may be implemented by hardware executing corresponding software. The hardware or software includes one or more modules corresponding to the foregoing functions.

According to an eighth aspect, a communication apparatus is provided, and the communication apparatus has a function of implementing the method in the second aspect or any possible implementation of the second aspect. The function may be implemented by hardware, or may be implemented by hardware executing corresponding software. The hardware or software includes one or more modules corresponding to the foregoing functions.

According to a ninth aspect, a communication apparatus is provided, and the communication apparatus has a function of implementing the method in the third aspect or any possible implementation of the third aspect. The function may be implemented by hardware, or may be implemented by hardware executing corresponding software. The hardware or software includes one or more modules corresponding to the foregoing functions.

According to a tenth aspect, a communication apparatus is provided, and the communication apparatus has a function of implementing the method in the fourth aspect or any possible implementation of the fourth aspect. The function may be implemented by hardware, or may be implemented by hardware executing corresponding software. The hardware or software includes one or more modules corresponding to the foregoing functions.

According to an eleventh aspect, a communication apparatus is provided, and the communication apparatus has a function of implementing the method in the sixth aspect. The function may be implemented by hardware, or may be implemented by hardware executing corresponding software. The hardware or software includes one or more modules corresponding to the foregoing functions.

According to a twelfth aspect, this application provides a communication device, including at least one processor, where the at least one processor is coupled to at least one memory, the at least one memory is configured to store a computer program or instructions, and the at least one processor is configured to invoke and run the computer program or instructions from the at least one memory, so that the communication device performs the method in the first aspect or any possible implementation of the first aspect.

In an example, the communication apparatus may be an application network element.

In another example, the communication apparatus may be a component (for example, a chip or an integrated circuit) installed in an application network element.

According to a thirteenth aspect, this application provides a communication device, including at least one processor, where the at least one processor is coupled to at least one memory, the at least one memory is configured to store a computer program or instructions, and the at least one processor is configured to invoke and run the computer program or instructions from the at least one memory, so that the communication device performs the method in the second aspect or any possible implementation of the second aspect.

In an example, the communication apparatus may be a network exposure network element.

In another example, the communication apparatus may be a component (for example, a chip or an integrated circuit) installed in a network exposure network element.

According to a fourteenth aspect, this application provides a communication device, including at least one processor, where the at least one processor is coupled to at least one memory, the at least one memory is configured to store a computer program or instructions, and the at least one processor is configured to invoke and run the computer program or instructions from the at least one memory, so that the communication device performs the method in the third aspect or any possible implementation of the third aspect.

In an example, the communication apparatus may be a first network element.

In another example, the communication apparatus may be a component (for example, a chip or an integrated circuit) installed in a first network element.

According to a fifteenth aspect, this application provides a communication device, including at least one processor, where the at least one processor is coupled to at least one memory, the at least one memory is configured to store a computer program or instructions, and the at least one processor is configured to invoke and run the computer program or instructions from the at least one memory, so that the communication device performs the method in the fourth aspect or any possible implementation of the fourth aspect.

In an example, the communication apparatus may be an authentication server.

In another example, the communication apparatus may be a component (for example, a chip or an integrated circuit) installed in an authentication server.

According to a sixteenth aspect, this application provides a communication device, including at least one processor, where the at least one processor is coupled to at least one memory, the at least one memory is configured to store a computer program or instructions, and the at least one processor is configured to invoke and run the computer program or instructions from the at least one memory, so that the communication device performs the method in the sixth aspect.

According to a seventeenth aspect, this application provides a computer program product. The computer program product includes computer program code, and when the computer program code is run on a computer, the method in the first aspect or any possible implementation of the first aspect is performed.

According to an eighteenth aspect, this application provides a computer program product. The computer program product includes computer program code, and when the computer program code is run on a computer, the method in the second aspect or any possible implementation of the second aspect is performed.

According to a nineteenth aspect, this application provides a computer program product. The computer program product includes computer program code, and when the computer program code is run on a computer, the method in the third aspect or any possible implementation of the third aspect is performed.

According to a twentieth aspect, this application provides a computer program product. The computer program product includes computer program code, and when the computer program code is run on a computer, the method in the fourth aspect or any possible implementation of the fourth aspect is performed.

According to a twenty-first aspect, this application provides a computer program product. The computer program product includes computer program code, and when the computer program code is run on a computer, the method in the sixth aspect is performed.

According to a twenty-second aspect, this application provides a computer-readable storage medium. The computer-readable storage medium stores computer instructions. When the computer instructions are run on a computer, the method in the first aspect or any possible implementation of the first aspect is performed.

According to a twenty-third aspect, this application provides a computer-readable storage medium. The computer-readable storage medium stores computer instructions. When the computer instructions are run on a computer, the method in the second aspect or any possible implementation of the second aspect is performed.

According to a twenty-fourth aspect, this application provides a computer-readable storage medium. The computer-readable storage medium stores computer instructions. When the computer instructions are run on a computer, the method in the third aspect or any possible implementation of the third aspect is performed.

According to a twenty-fifth aspect, this application provides a computer-readable storage medium. The computer-readable storage medium stores computer instructions. When the computer instructions are run on a computer, the method in the fourth aspect or any possible implementation of the fourth aspect is performed.

According to a twenty-sixth aspect, this application provides a computer-readable storage medium. The computer-readable storage medium stores computer instructions. When the computer instructions are run on a computer, the method in the sixth aspect is performed.

According to a twenty-seventh aspect, a chip is provided, including a processor configured to read instructions stored in a memory. When the processor executes the instructions, the chip is enabled to implement the method in the first aspect or any possible implementation of the first aspect.

According to a twenty-eighth aspect, a chip is provided, including a processor configured to read instructions stored in a memory. When the processor executes the instructions, the chip is enabled to implement the method in the second aspect or any possible implementation of the second aspect.

According to a twenty-ninth aspect, a chip is provided, including a processor configured to read instructions stored in a memory. When the processor executes the instructions, the chip is enabled to implement the method in the third aspect or any possible implementation of the third aspect.

According to a thirtieth aspect, a chip is provided, including a processor configured to read instructions stored in a memory. When the processor executes the instructions, the chip is enabled to implement the method in the fourth aspect or any possible implementation of the fourth aspect.

According to a thirty-first aspect, a chip is provided, including a processor configured to read instructions stored in a memory. When the processor executes the instructions, the chip is enabled to implement the method in the sixth aspect.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

### BRIEF DESCRIPTION OF DRAWINGS

FIG. 1 is a schematic diagram of a network architecture applicable to a method according to an embodiment of this application;
FIG. 2 is a schematic diagram of a network access method applicable to a method according to an embodiment of this application;
FIG. 3 is a service scenario of a hosting network applicable to this application;
FIG. 4 is a schematic interaction diagram of an example of a network capability exposure method applicable to this application;
FIG. 5 is a schematic interaction diagram of another example of a network capability exposure method applicable to this application;
FIG. 6 is a schematic interaction diagram of still another example of a network capability exposure method applicable to this application;
FIG. 7 is a schematic interaction diagram of still another example of a network capability exposure method applicable to this application;
FIG. 8A and FIG. 8B are a schematic interaction diagram of still another example of a network capability exposure method applicable to this application;
FIG. 9 is a schematic interaction diagram of still another example of a network capability exposure method applicable to this application;
FIG. 10A and FIG. 10B are a schematic interaction diagram of still another example of a network capability exposure method applicable to this application;
FIG. 11A and FIG. 11B are a schematic interaction diagram of still another example of a network capability exposure method applicable to this application;
FIG. 12A and FIG. 12B are a schematic interaction diagram of still another example of a network capability exposure method applicable to this application;
FIG. 13A and FIG. 13B are a schematic interaction diagram of still another example of a network capability exposure method applicable to this application;
FIG. 14 is a schematic block diagram of a communication apparatus according to an embodiment of this application; and
FIG. 15 is a schematic block diagram of a communication device according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communications (global system for mobile communications, GSM) system, a code division multiple access (code division multiple access, CDMA) system, and a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a future fifth generation (5th generation, 5G) system, a new radio (new radio, NR), and the like.

Terminal equipment in embodiments of this application may be user equipment, an access terminal, a subscriber unit, a subscriber station, a mobile station, a mobile station, a remote station, a remote terminal, mobile equipment, a user terminal, a terminal, a wireless communication device, a user agent, or a user apparatus. The terminal equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, terminal equipment in a future 5G network, terminal equipment in a future evolved public land mobile network (public land mobile network, PLMN), or the like. This is not limited in embodiments of this application.

An operator network device in embodiments of this application may be a device configured to communicate with the terminal equipment in the foregoing communication system, for example, a device such as a core network element, or may be a radio controller in a cloud radio access network (cloud radio access network, CRAN) scenario. Alternatively, the network device may be a relay station, an access point, a network device in a 5G network, a network device in a PLMN/NPN network, or the like. This is not specifically limited in embodiments of this application.

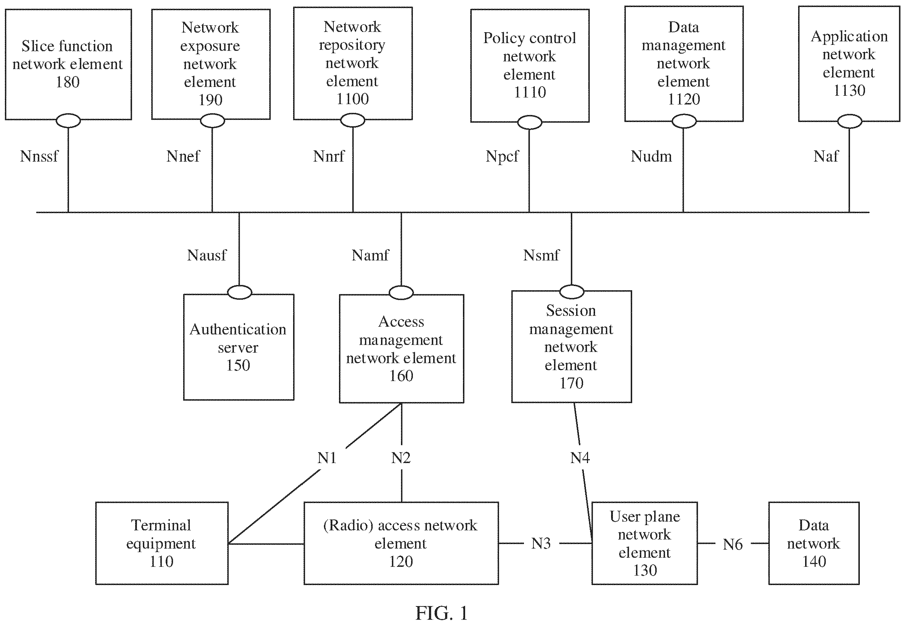

For ease of understanding embodiments of this application, a communication system to which embodiments of this application are applicable is first briefly described with reference to FIG. 1.

FIG. 1 is a network architecture applied to an embodiment of this application. As shown in FIG. 1, the following separately describes parts involved in the network architecture.
1. Terminal equipment (terminal equipment) 110 is an ingress for interaction between a mobile user and a network, and can provide a basic computing capability and storage capability, display a service window to a user, and receive a user operation input. The terminal equipment may include various handheld devices, vehicle-mounted devices, wearable devices, computing devices that have a wireless communication function, or other processing devices connected to a wireless modem, and terminals in various forms, such as a mobile station (mobile station, MS), a terminal (terminal), user equipment (user equipment, UE), and a software terminal, for example, a water meter, an electricity meter, or a sensor.
2. A (radio) access network (radio access network, (R)AN) element 120 is configured to provide a network access function for an authorized terminal equipment in a specific area, and can use transmission tunnels with different quality based on levels, service requirements, and the like of the terminal equipment.
   The (R)AN element can manage radio resources and provide an access service for terminal equipment, to complete forwarding a control signal and terminal equipment data between the terminal equipment and a core network. The (R)AN element may also be understood as a base station in a conventional network.
3. A user plane (user plane) network element 130 is used for packet routing and forwarding, quality of service (quality of service, QoS) handling on user plane data, and the like.
   In a 5G communication system, the user plane network element may be a user plane function (user plane function, UPF) network element. In a future communication system, the user plane network element may still be the UPF network element, or may have another name. This is not limited in this application.
4. A data network (data network) 140 is a data network that provides a business service for a user. Generally, a client is located in the UE, and a server is located in the data network. The data network may be a private network like a local area network, an external network that is not controlled by an operator, like the Internet, or a dedicated network jointly deployed by operators, like a network that provides an IMS service.
   In the 5G communication system, the data network may be the data network, DN. In the future communication system, the data network may still be the DN, or may have another name. This is not limited in this application.
5. An authentication server (authentication server) 150 is used for service authentication and key generation for bidirectional authentication on terminal equipment, and supports a unified authentication framework.
   In the 5G communication system, the authentication server may be an authentication server function (authentication server function, AUSF) network element. In the future communication system, the authentication server function network element may still be the AUSF network element, or may have another name. This is not limited in this application.
6. An access management (access management) network element 160 is mainly used for mobility management, access management, and the like, and may be configured to implement functions, for example, lawful interception and access authorization/authentication, other than session management in functions of a mobility management entity (mobility management entity, MME).
   In the 5G communication system, the access management network element may be an access and mobility management function (access and mobility management function, AMF) network element. In the future communication system, the access management network element may still be the AMF network element, or may have another name. This is not limited in this application.
7. A session management (session management) network element 170 is mainly used for session management, internet protocol (internet protocol, IP) address assignment and management of terminal equipment, selection of manageable user plane function, termination of interfaces for policy control and charging functions, a downlink data notification, and the like.
   In the 5G communication system, the session management network element may be a session management function (session management function, SMF) network element. In the future communication system, the session management network element may still be the SMF network element, or may have another name. This is not limited in this application.
8. A slice selection (slice selection) network element 180 is configured to: select a group of network slice instances that serve terminal equipment, and determine a group of access management network elements that serve the terminal equipment.
   In the 5G communication system, a network exposure network element may be a network slice selection function (network slice selection function, NSSF) network element. In the future communication system, the network exposure network element may still be the NSSF network element, or may have another name. This is not limited in this application.
9. A network exposure (network exposure) network element 190 is configured to expose network capabilities to a third-party application, and can implement friendly interconnection between the network capability and a service requirement.
   In the 5G communication system, the network exposure network element may be a network exposure function (network exposure function, NEF) network element. In the future communication system, the network exposure network element may still be the NEF network element, or may have another name. This is not limited in this application.
10. A network repository (network repository) network element 1100 is configured to maintain real-time information of all network function services in a network.
   In the 5G communication system, the network repository network element may be a network repository function (network repository function, NRF) network element. In the future communication system, the network repository network element may still be the NRF network element, or may have another name. This is not limited in this application.
11. A policy control (policy control) network element 1110 is configured to provide a unified policy framework to govern network behavior, and provides policy rule information and the like for control plane function network elements (such as AMF and SMF network elements).
   In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.
12. A data management (data management) network element 1120 is used for handling of terminal equipment identifier, access authentication, registration, mobility management, and so on.
   In the 5G communication system, the data management network element may be a unified data management (unified data management, UDM) network element. In the future communication system, the unified data management network element may still be the UDM network element, or may have another name. This is not limited in this application.
13. An application (application) network element 1130 is used for performing application-affected data routing, access a network, interacting with a policy framework to perform policy control, and the like.

In the 5G communication system, the application network element may be an application function (application function, AF) network element. In the future communication system, the application network element may still be the AF network element, or may have another name. This is not limited in this application.

It may be understood that the foregoing network elements or functions may be network elements in a hardware device, software functions running on dedicated hardware, or virtualized functions instantiated on a platform (for example, a cloud platform). One or more services may be obtained through division into the network elements or the functions. Further, a service that exists independently of network functions may occur.

Further, the AF network element is referred to as AF for short, the NEF network element is referred to as NEF for short, the NRF network element is referred to as NRF for short, and the PCF network element is referred to as PCF for short. In other words, in the following descriptions of this application, the AF may be replaced with the application network element, the NEF may be replaced with the network exposure network element, the NRF may be replaced with the network repository network element, and the PCF may be replaced with the policy control network element.

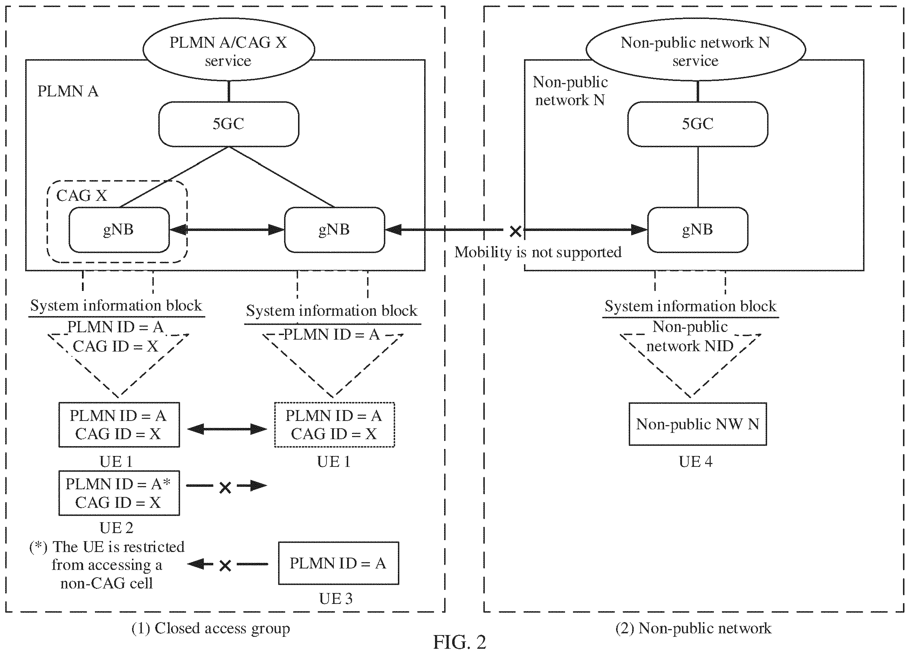

FIG. 2 is a schematic diagram of NPN access. An NPN is a non-public 5G network. The non-public network may implement a public network integrated NPN (public network integrated NPN, PNI-NPN) based on support of a PLMN, or may implement a standalone NPN (standalone NPN, SNPN) without depending on a network function of the PLMN.

The PNI-NPN may be implemented by using a network slice in the PLMN. To prevent an unauthorized terminal equipment from attempting to access and select the PNI-NPN, a closed access group (closed access group, CAG) function is additionally used. A CAG identifies a group of users that are allowed to access a cell (a CAG cell) associated with the CAG. To prevent terminal equipment that is not allowed to access the CAG cell from automatically selecting and accessing the CAG cell, the CAG cell broadcasts one or more closed access group identifiers (CAG identifiers, CAG IDs), and an available closed access group list (CAG list) and an indication (where the indication indicates whether the terminal equipment is allowed to access a 5G system through only the CAG cell) are configured on the terminal equipment. Terminal subscription data on a UDM includes the available CAG list and indication.

The SNPN network does not depend on the PLMN network. The SNPN network is identified by using PLMN ID + NID, where the NID is a network identifier. The PLMN ID may be an inherent value reserved by a third-party operator or a specific value of a PLMN operator that deploys the SNPN. In the SNPN network, a cell in the SNPN network broadcasts PLMN ID + NID, and the terminal equipment selects a to-be accessed NPN network based on broadcast information and configured network selection information. If the terminal equipment finds that the configured network selection information (PLMN ID + NID 1) is different from the PLMN ID or PLMN ID + NID 2 broadcast by the network, the terminal equipment does not select the SNPN network to access.

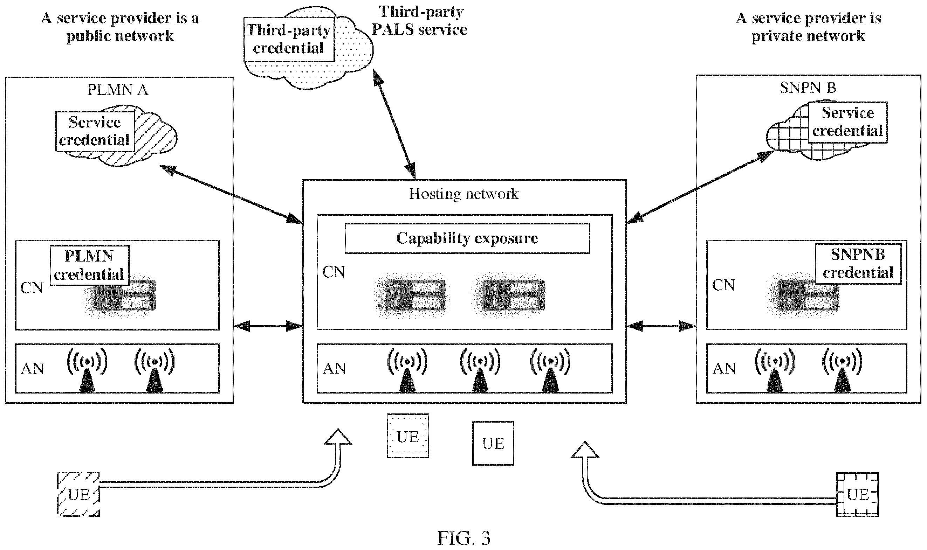

FIG. 3 shows a network capability exposure scenario. A hosting network is also referred to as a hosting network, and may be configured to provide access to a localized service for a user or a device. As shown in FIG. 3, terminal equipment accesses a service of the hosting network by accessing the hosting network. The hosting network may be an NPN or a PLMN. The service accessed by the terminal equipment may be provided by the hosting network, or may be provided by another NPN/PLMN operator, or may be provided by a third party. The hosting network may be located in a theme park, a sports venue, an international venue, a performance venue, and the like. A user/device that subscribes to the service of the hosting network may temporarily access the hosting network at specific time and a specific place after moving to an area of the hosting network, and access a specific service of the hosting network.

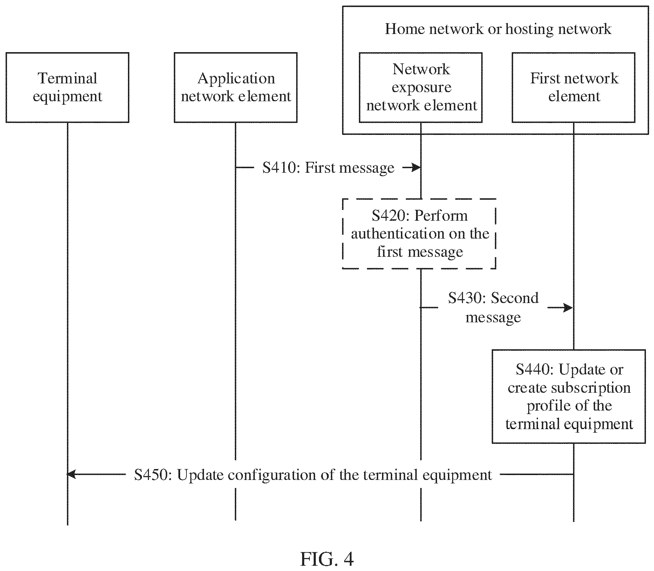

With reference to FIG. 4 to FIG. 6, the following describes how to implement, by using a network capability exposure method, that terminal equipment accesses a service of a hosting network after subscribing to the service of the hosting network.

FIG. 4 is a schematic diagram of a network capability exposure method according to an embodiment of this application.

S410: An application network element sends a first message to a network exposure network element.

In some embodiments, the first message is used to request to update or store service information that is of a hosting network and that is subscribed to by terminal equipment, and the first message includes the service information that is of the hosting network and that is subscribed to by the terminal equipment.

In a possible implementation, the service information (service information) may be used to describe a service provided by the hosting network, and the terminal equipment may select and subscribe to the service of the hosting network by obtaining the service information.

In some embodiments, the service information may include one or more of the following information: a service description, a service parameter, an authentication mode, an access mode, effective time, an effective area, and a service credential.

In a possible implementation, the service description identifies the service that the terminal equipment accesses the hosting network. Optionally, the service description may include one or more of the following: a service identifier (service ID), a service type (service type), a service name (service name), a service provider (service provider), and a service introduction (service introduction).

In a possible implementation, the service parameter indicates a related network parameter of the service that the terminal equipment accesses the hosting network. Optionally, the service parameter may include one or more of the following: a data network name (data network name, DNN), single network slice selection assistance information (single network slice selection assistance information, S-NSSAI), and a traffic type (traffic type).

In a possible implementation, the authentication mode indicates an authentication or authorization method for the service that the terminal equipment accesses the hosting network. Optionally, the authentication mode may include one or more of the following: first-time authentication, secondary slice authentication, secondary service authentication, secondary session authentication, and application layer authentication.

In another possible implementation, the authentication mode may further include an address of an authentication server, and the authentication server is configured to perform service authentication.

In a possible implementation, the access mode indicates a routing manner of the service that the terminal equipment accesses the hosting network. Optionally, the access mode includes one or more of the following: local breakout (local breakout, LBO) and home routed (home routed, HR), an overlay mode, an underlay mode, and a dual registration mode.

For example, when the overlay access mode and underlay access mode are used, the access mode further includes an address of a non-3GPP interworking function (Non-3GPP InterWorking Function, N3IWF) network element.

In a possible implementation, the effective time indicates time information that the terminal equipment can use the service of the hosting network.

In a possible implementation, the effective area indicates location information that the terminal equipment can use the service of the hosting network.

In a possible implementation, the service credential is used to authenticate the service that the terminal equipment accesses the hosting network.

In a possible implementation, the first message may further include identification information of the terminal equipment, the identification information identifies the terminal equipment that subscribes to a function service of the hosting network, and the identification information may be sent to a first network element via a second message.

For example, the identification information of the terminal equipment may be any one of a generic public subscription identifier (generic public subscription identifier, GPSI), an internet protocol address (internet protocol address, IP address), a media access control address (media access control address, MAC address), and a group identifier (group identifier). When the terminal equipment is mobile equipment, the identification information of the terminal equipment may be the GPSI.

In another possible implementation, the first message may further include a subscription permanent identifier and a network access credential, the subscription permanent identifier and the network access credential are used to perform first-time authentication on the terminal equipment to access the hosting network, and the subscription permanent identifier and the network access credential are included in the second message.

For example, the subscription permanent identifier may be a subscription permanent identifier (subscription permanent identifier, SUPI), for example, an SUPI (NSI based SUPI) of a network-specific identifier (network-specific identifier, NSI) or an SUPI (IMSI based SUPI) based on an international mobile subscriber identity (international mobile subscriber identity, IMSI).

In still another possible implementation, the first message may further include network selection information, the network selection information is used by the terminal equipment to select the hosting network, and the network selection information includes a preferred hosting network identifier list or a preferred group identifier for network selection (group identifier for network selection, GIN) list, where the network selection information is included in the second message.

For example, the network selection information may be any one of a PLMN ID and an NID, a PLMN ID, and a PLMN ID and a CAG ID.

In yet another possible implementation, before sending the first message, the application network element may obtain the service information that is of the hosting network and that is subscribed to by the terminal equipment.

In a possible implementation, after the terminal equipment queries the service of the hosting network, the application network element obtains the service information that is of the hosting network and that is subscribed to by the terminal equipment.

For example, before moving to the hosting network, the terminal equipment queries the service of the hosting network by accessing a mobile network or wireless fidelity (wireless fidelity, Wi-Fi). After the terminal equipment queries the service of the hosting network, the application network element obtains the service information that is of the hosting network and that is subscribed to by the terminal equipment.

In yet another possible implementation, before sending the first message, the application network element may obtain one or more of the following information: identification information of the terminal equipment, information about the hosting network, cooperation model, the subscription permanent identifier, the network access credential, and the network selection information.

S420: Optionally, the network exposure network element authenticates the received first message.

In a possible implementation, the network exposure network element authenticates the first message according to a cooperation agreement. The cooperation agreement herein may also be referred to as a business agreement, a service agreement, a roaming agreement, a service agreement, or a service level agreement, and is generally locally configured.

For example, the network exposure network element authenticates the first message based on the service information that is in the first message and that is subscribed to by the terminal equipment. When an item of information (like the service description or the service parameter) included in the service information does not conform to the cooperation agreement, the network exposure network element fails to authenticate the first message.

For example, the network exposure network element authenticates the first message based on the identification information of the terminal equipment in the first message. When the identifier of the terminal equipment does not conform to the cooperation agreement, the network exposure network element fails to authenticate the first message.

S430: The network exposure network element sends a second message to the first network element.

In some embodiments, the second message is used to request to update or create subscription profile of the terminal equipment, so that the subscription profile of the terminal equipment includes the service information that is of the hosting network and that is subscribed to by the terminal equipment, and the second message includes the service information that is of the hosting network and that is subscribed to by the terminal equipment.

In some embodiments, the first network element is a unified data management network element or a unified data repository network element.

Optionally, when the second message is used to request to create the subscription profile of the terminal equipment, the second message further includes the subscription permanent identifier and the network access credential, and the subscription permanent identifier and the network access credential are included in the first message received by the network exposure network element.

In another possible implementation, if the received first message includes the identification information of the terminal equipment, the second message further includes the identification information of the terminal equipment received from the first message.

In another possible implementation, if the received first message includes the network selection information, the second message further includes the network selection information received from the first message.

In a possible implementation, the network exposure network element sends the second message to the first network element after the authentication on the first message succeeds.

S440: The first network element updates or creates the subscription profile of the terminal equipment.

S450: The first network element updates configuration of the terminal equipment.

In a possible implementation, the service information may be configured by the first network element for the terminal equipment in a control plane manner.

In another possible implementation, if the received second message includes the network selection information, the network selection information may be configured by the first network element for the terminal equipment in a control plane manner.

In still another possible implementation, the updating configuration of the terminal equipment includes updating the service information of the terminal equipment.

In yet another possible implementation, the updating configuration of the terminal equipment includes updating the network selection information of the terminal equipment.

In some embodiments, the first network element is a unified data management network element or a unified data repository network element.

In still another possible implementation, the network exposure network element and the first network element are located in the hosting network or in a home network of the terminal equipment.

By using the network capability exposure method provided in the embodiment shown in FIG. 4, after the service of the hosting network is subscribed, information such as terminal equipment configuration and terminal equipment subscription in the network can be updated, so that the terminal equipment subsequently accesses the hosting network and uses the service in the hosting network.

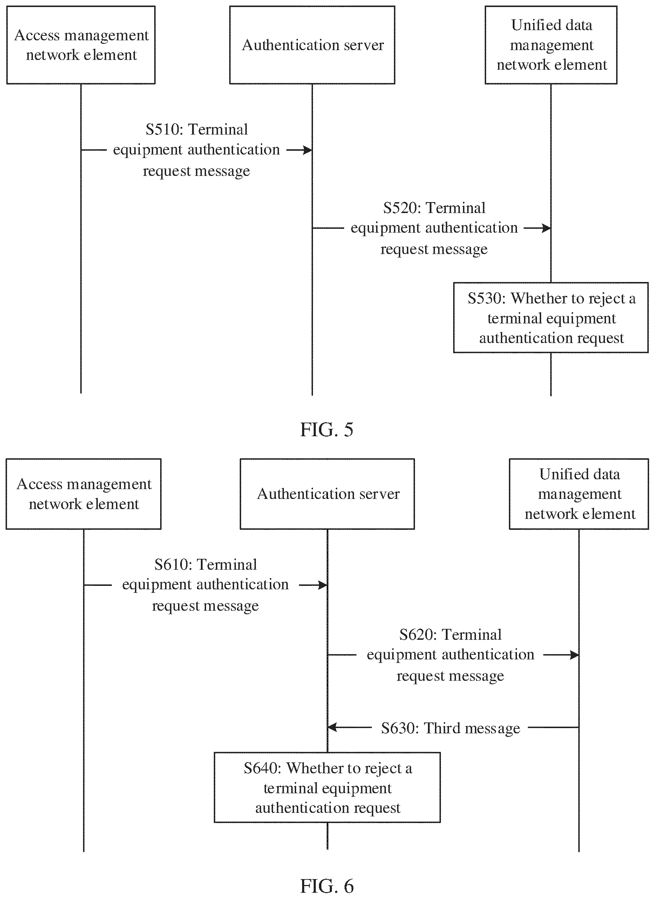

With reference to FIG. 5 to FIG. 7, the following describes how to implement, by using the network capability exposure method provided in this application, that terminal equipment accesses a hosting network that provides a business service.

S510: An authentication server receives a terminal equipment authentication request message sent by an access management network element.

In some embodiments, the authentication request message includes location information and/or time information of the terminal equipment.

In some embodiments, the access management network element is located in the hosting network.

S520: The authentication server sends the terminal equipment authentication request message to a unified data management network element.

S530: The unified data management network element determines whether to reject a terminal equipment authentication request.

In a possible implementation, the authentication request message includes the location information of the terminal equipment, and the unified data management network element determines, based on an effective area in the service information of the hosting network that is subscribed to by the terminal equipment, whether to reject the terminal equipment authentication request.

For example, the effective area in the service information of the hosting network that is subscribed to by the terminal equipment includes a location A, a location B, and a location C. When the terminal equipment is located at any one of the foregoing three locations, the unified data management network element does not reject the terminal equipment authentication request. When the terminal equipment is located at a location D that does not belong to any one of the foregoing three locations, the unified data management network element rejects the terminal equipment authentication request.

In another possible implementation, the authentication request message includes the time information of the terminal equipment, and the unified data management network element determines, based on effective time in the service information of the hosting network that is subscribed to by the terminal equipment, whether to reject the terminal equipment authentication request.

For example, the effective time in the service information of the hosting network that is subscribed to by the terminal equipment is 08:00 on October 1, 2020 to 18:00 on October 3, 2020. When the terminal equipment sends the authentication request to the hosting network within the time period, the unified data management network element does not reject the terminal equipment authentication request. When the terminal equipment sends the authentication request to the hosting network on October 5, 2020, the unified data management network element rejects the terminal equipment authentication request.

In still another possible implementation, the authentication request message includes the location information and the time information of the terminal equipment, and the unified data management network element determines, based on an effective area and/or effective time in the service information of the hosting network that is subscribed to by the terminal equipment, whether to reject the terminal equipment authentication request.

For example, the effective area in the service information of the hosting network that is subscribed to by the terminal equipment includes a location A, a location B, and a location C, and the effective time is 08:00 on October 1, 2020 to 18:00 on October 3, 2020. When the terminal equipment is not in any of the foregoing three locations or does not send the authentication request to the hosting network within the foregoing effective time, the unified data management network element of the hosting network rejects the terminal equipment authentication request.

By using the network capability exposure method shown in FIG. 5, the unified data management network element may authenticate access of the terminal equipment based on the effective area and/or the effective time that are/is in the stored service information that is of the hosting network and that is subscribed to by the terminal equipment, and terminal equipment that passes the authentication may use the service of the subscribed hosting network.

FIG. 6 is another method for accessing a hosting network by terminal equipment by using a network capability exposure method according to an embodiment of this application.

S610: An authentication server receives a terminal equipment authentication request message sent by an access management network element.

In some embodiments, the authentication request message includes location information and/or time information of the terminal equipment.

In some embodiments, the access management network element is located in the hosting network.

S620: The authentication server sends the terminal equipment authentication request message to a unified data management network element.

S630: The unified data management network element sends a third message to the authentication server.

In some embodiments, the third message is used to assist the authentication server in authenticating that the terminal equipment accesses the hosting network.

In some embodiments, the third message includes service information of the hosting network that is subscribed to by the terminal equipment.

S640: The authentication server determines whether to reject a terminal equipment authentication request.

In a possible implementation, the service information includes an effective area and/or effective time, and the authentication server determines, based on the effective area and the effective time included in the service information, whether to reject the terminal equipment authentication request.

By using the network capability exposure method shown in FIG. 6, the authentication server may authenticate access of the terminal equipment with reference to the received third message, and terminal equipment that passes the authentication may use the service of the subscribed hosting network.

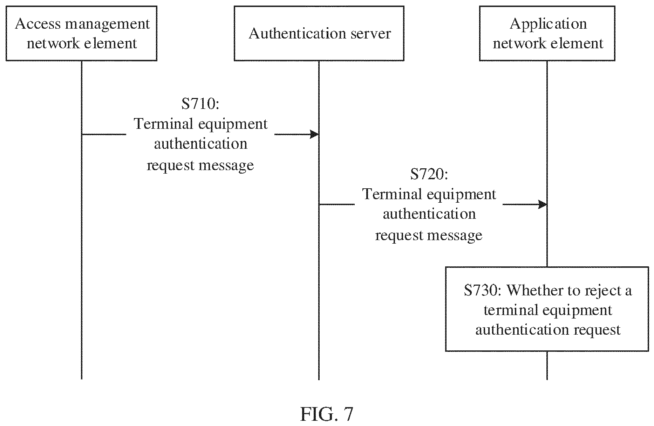

FIG. 7 is still another method for accessing a hosting network by terminal equipment by using a network capability exposure method according to an embodiment of this application.

S710: An authentication server receives a terminal equipment authentication request message sent by an access management network element.

In some embodiments, the authentication request message includes location information and/or time information of the terminal equipment.

In some embodiments, the access management network element is located in the hosting network.

S720: The authentication server sends the terminal equipment authentication request message to an application network element.

In a possible implementation, the terminal equipment authentication request message may be forwarded to the application network element via a network slice-specific and an SNPN authentication and authorization function (network slice-specific and SNPN authentication and authorization function, NSSAAF) network element as a relay. The application network element supports an authentication, authorization, and accounting server (authentication authorization accounting server, AAA-S) function.

S730: The application network element determines whether to reject the terminal equipment authentication request.

In a possible implementation, the application network element performs access authentication on the terminal equipment based on an effective area and effective time in service information of the hosting network that is subscribed to by the terminal equipment, and determines whether to reject the terminal equipment authentication request.

By using the network capability exposure method shown in FIG. 7, the application network element may authenticate access of the terminal equipment, and terminal equipment that passes the authentication may use the service of the subscribed hosting network.

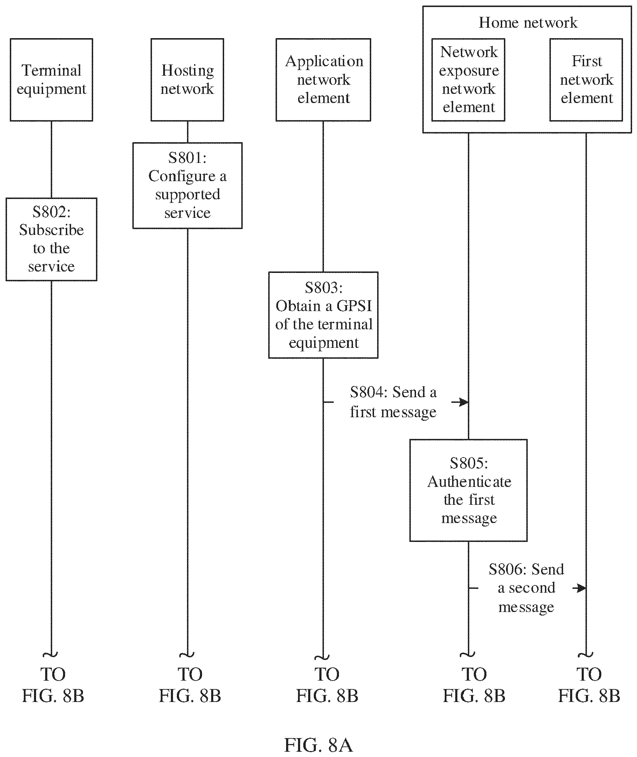

With reference to FIG. 8A to FIG. 13B, the following describes in detail the network capability exposure method provided in this application in different scenarios of the communication methods in the foregoing embodiments in FIG. 4 to FIG. 7.

It should be noted that, in different scenarios in FIG. 8A to FIG. 13B, content included in the foregoing information such as the service information, the first message, the second message, the third message, and the terminal equipment authentication request message is described in detail in the descriptions of the embodiments shown in FIG. 4 to FIG. 7. To avoid repetition, for embodiments in different scenarios, only a part that differs from the embodiments shown in FIG. 4 to FIG. 7 is specifically described. For content of a same part, refer to the descriptions of the embodiments shown in FIG. 4 to FIG. 7.

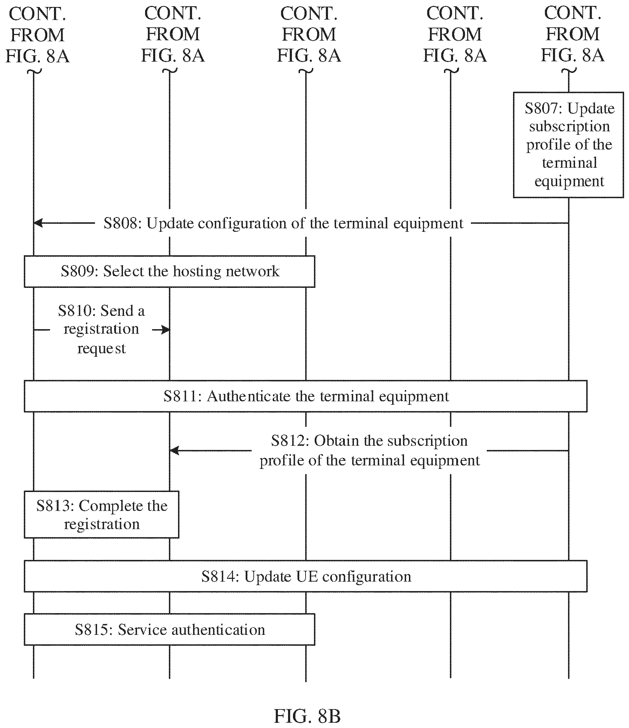

In the application scenario in FIG. 8A and FIG. 8B, a mobile network operator (mobile network operator, MNO) serves as a partner of a hosting network, and a customer of the mobile network operator may subscribe to a service of the hosting network. The MNO stores a service subscription and performs user authentication, and an application network element performs service authentication.

S801: The hosting network configures a supported service.

S802: Terminal equipment subscribes to the service.

S803: The application network element obtains a GPSI of the terminal equipment and service information that is of the hosting network and that is subscribed to by the terminal equipment.

S804: The application network element sends a first message to a network exposure network element of a home network MNO of the terminal equipment.

In some embodiments, the first message is used to request to update or store the service information that is of the hosting network and that is subscribed to by the terminal equipment.

S805: The network exposure network element authenticates the first message.

In some embodiments, a first network element may be a unified data management network element or a unified data repository network element.

In a possible implementation, the network exposure network element authenticates the first message based on the service information that is in the first message and that is subscribed to by the terminal equipment.

S806: The network exposure network element sends a second message to the first network element.

In some embodiments, the second message is used to request to update subscription profile of the terminal equipment.

S807: The first network element updates the subscription profile of the terminal equipment.

S808: The first network element configures information such as a network selection parameter and a service parameter on the terminal equipment by using a control plane.

In a possible implementation, a control plane manner may be a terminal equipment parameter update (UE parameter update, UPU) procedure, that is, the first network element sends UE information to an access management network element, and the access management network element uses a non-access stratum (non-access stratum, NAS) message to configure the UE information for the UE.

In another possible implementation, a control plane manner may be a steering of roaming (steering of roaming, SoR) procedure, that is, the first network element sends UE information to an access management network element, and the access management network element configures the UE information for the UE via a NAS message.

Optionally, the information such as the network selection parameter and the service parameter may alternatively be configured on the terminal equipment by the application network element in a control plane or user plane manner.

In a possible implementation, the application network element sends the UE information (the network selection parameter and the service parameter) to the access management network element, and the access management network element configures the UE information for the UE via the NAS message.

In another possible implementation, the application network element configures the UE information (the network selection parameter and the service parameter) for the UE in a user plane manner.

S809: The terminal equipment selects the hosting network based on the configured service parameter and network selection parameter and broadcast information of the hosting network.

S810: The terminal equipment sends a registration request message to the access management network element.

In a possible implementation, the registration request message includes a SUPI of a home location of the terminal equipment.

S811: An authentication server of the home network and the unified data management network element perform primary authentication, that is, identity authentication, on the UE.

In a possible implementation, the access management network element of the hosting network selects the authentication server of the home network and the unified data management network element based on the SUPI of the terminal equipment, and the authentication server and the unified data management network element perform primary authentication on the UE.

Optionally, the authentication server and the unified data management network element may obtain a location of the UE, and verify the UE based on the location of the UE, access time, and the effective area and the effective time of the hosting network service that is subscribed to by the UE.

S812: The access management network element obtains the subscription profile of the terminal equipment from the first network element.

In a possible implementation, the subscription profile includes the service information that is of the hosting network and that is subscribed to by the UE.

S813: Complete a registration process.

S814: Update configuration of the terminal equipment, including updating, via a registration response message, a UE configuration update (UE configuration update, UCU) procedure, or a UPU procedure, the service information that is of the hosting network and that is subscribed to by the UE or network selection information.

In a possible implementation, updated configuration information includes allowed network slice selection assistance information (allowed NSSAI).

In another possible implementation, updated configuration information includes a UE route selection policy (UE route selection policy, URSP).

S815: Perform hosting network service authentication on the terminal equipment based on a selected authentication mode included in the service information that is of the terminal equipment and that is subscribed to by the UE.

According to the network capability exposure method in this embodiment of this application, after a user of a network operator subscribes to the service of the hosting network, information configuration of the terminal equipment and information such as a subscription of the terminal equipment in a home network of the user are updated, so that access control is performed for subsequent UE selection, accessing a hosting network, and accessing a service of the hosting network, so that the terminal equipment completes accessing the hosting network and may use the service of the subscribed hosting network.

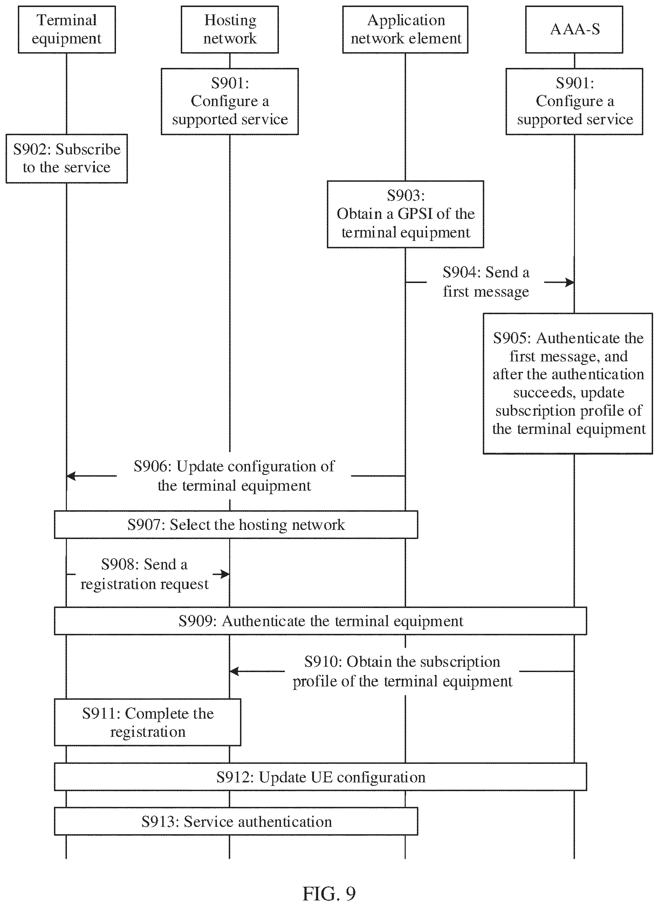

In the application scenario in FIG. 9, a third party serves as a partner of a hosting network, and a client of the third party may subscribe to a service of the hosting network, and an authentication, authorization, and accounting server (authentication, authorization, and accounting server, AAA-S) of the third party updates service information that is of the hosting network and that is subscribed to by the user, and perform user authentication.

S901: The AAA-S and the hosting network configure a supported service.

S902: Terminal equipment subscribes to the service.

S903: An application network element obtains a GPSI of the terminal equipment and service information that is of the hosting network and that is subscribed to by the terminal equipment.

S904: The application network element sends a first message to the AAA-S.

In some embodiments, the first message is used to request to update or store the service information that is of the hosting network and that is subscribed to by the terminal equipment.

S905: The AAA-S authenticates the first message according to a cooperation protocol. After the authentication succeeds, the AAA-S updates subscription profile of the terminal equipment.

S906: The application network element configures information such as a network selection parameter and a service parameter on the terminal equipment in a control plane or user plane manner.

Optionally, in S905, when the AAA-S updates the subscription profile of the terminal equipment including the network selection parameter and the service parameter, and the AAA-S configures the information such as the network selection parameter and the service parameter on the terminal equipment in the user plane manner.

S907: The terminal equipment selects the hosting network based on the configured service parameter and network selection parameter and broadcast information of the hosting network.

S908: The terminal equipment sends registration request message to an access management network element of the hosting network.

In a possible implementation, the registration request message includes an NSI based SUPI.

S909: The AAA-S completes user authentication of the terminal equipment.

In a possible implementation, after receiving the registration request information of the terminal equipment, the access management network element of the hosting network selects an authentication server of the hosting network, then the authentication server selects an NSSAAF of the hosting network, and the NSSAAF selects the AAA-S based on the NSI based SUPI of the terminal equipment. The AAA-S completes the user authentication on the terminal equipment.

S910: The hosting network obtains the subscription profile of the terminal equipment from the AAA-S, including the subscribed service information of the hosting network.

In a possible implementation, the hosting network may obtain, from the AAA-S via the authentication server and/or the NSSAAF, the service information that is of the hosting network and that is subscribed to by the terminal equipment.

In another possible implementation, the hosting network directly obtains, from the AAA-S server, the service information that is of the hosting network and that is subscribed to by the terminal equipment.

S911: Complete a registration process.

S912: Update configuration of the terminal equipment, including updating, via a registration response message, a UCU procedure, or a UPU procedure, the service information that is of the hosting network and that is subscribed to by the UE or network selection information.

In a possible implementation, updated configuration information includes allowed NSSAI.

In another possible implementation, updated configuration information includes a URSP.

S913: Perform hosting network service authentication on the terminal equipment based on a selected authentication mode included in the service information that is of the terminal equipment and that is subscribed to by the UE.

According to the network capability exposure method in this embodiment of this application, after a third-party partner user of the hosting network subscribes to the service of the hosting network, information configuration of the terminal equipment and information such as a subscription of the terminal equipment in a third-party AAA-S are updated, so that access control is performed for subsequent UE selection, accessing the hosting network, and accessing a service of the hosting network, so that the terminal equipment completes accessing the hosting network and may use the service of the subscribed hosting network.

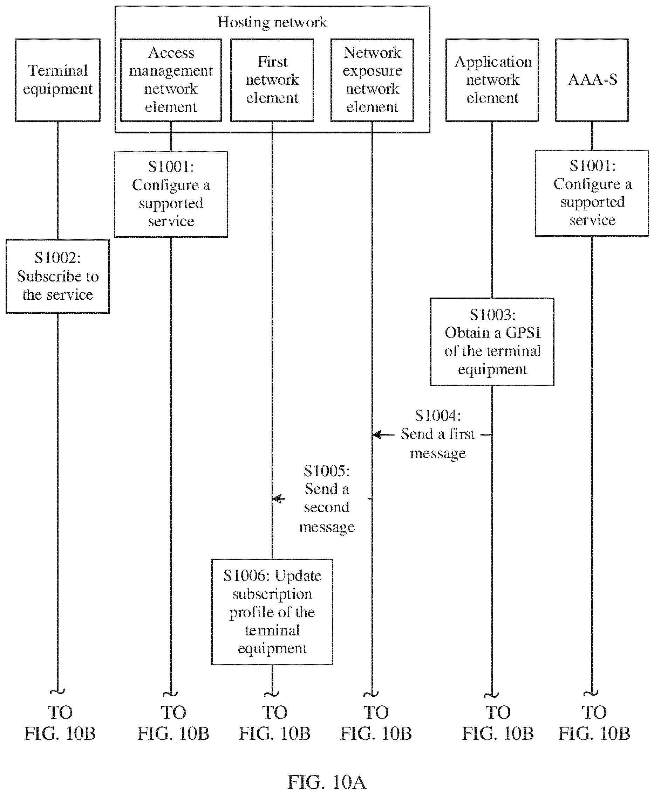

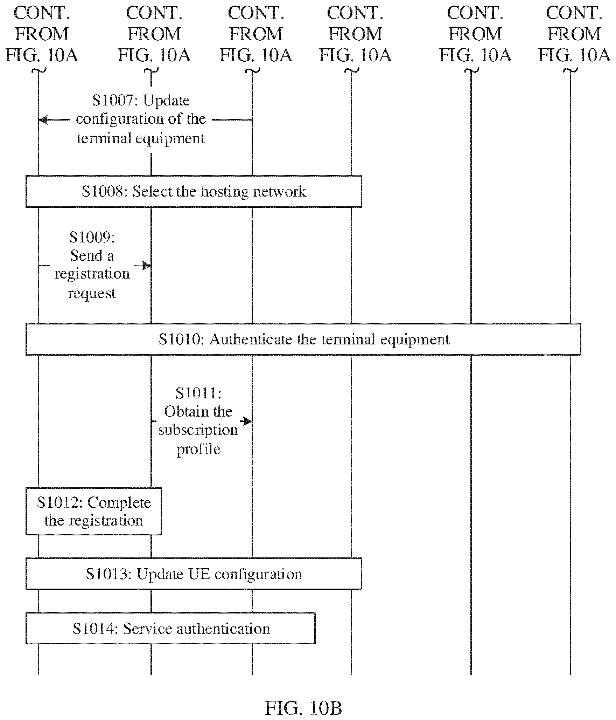

In the application scenario in FIG. 10A and FIG. 10B, a third party serves as a partner of a hosting network, and a client of the third party may subscribe to a service of the hosting network, an AAA-S of the third party performs user authentication, the hosting network stores a service subscription of terminal equipment, and an application network element performs service authentication on the terminal equipment.

S 1001: The AAA-S and the hosting network configure a supported service.

S1002: The terminal equipment subscribes to the service.

S 1003. The application network element obtains a GPSI of the terminal equipment and service information that is of the hosting network and that is subscribed to by the terminal equipment.

S1004: The application network element sends a first message to a network exposure network element of the hosting network.

In some embodiments, the first message is used to request to update or store the service information that is of the hosting network and that is subscribed to by the terminal equipment.

S 1005: The network exposure network element of the hosting network sends a second message to a first network element.

In some embodiments, the second message is used to request to update subscription profile of the terminal equipment.

In some embodiments, the first network element may be a unified data management network element or a unified data repository network element.

S1006: The first network element updates the subscription profile of the terminal equipment.

S1007: The first network element configures information such as a network selection parameter and a service parameter on the terminal equipment by using a control plane.

In a possible implementation, the control plane manner may be a UPU.

In another possible implementation, the control plane manner may be SoR.

Optionally, the information such as the network selection parameter and the service parameter may alternatively be configured on the terminal equipment by the application network element in a control plane or user plane manner.

In a possible implementation, the application network element sends UE information (the network selection parameter and the service parameter) to an access management network element, and the access management network element configures the UE information for the UE via a NAS message.

In another possible implementation, the application network element configures UE information (the network selection parameter and the service parameter) for the UE in a user plane manner.

S1008: The terminal equipment selects the hosting network based on the configured service parameter and network selection parameter and broadcast information of the hosting network.

S1009: The terminal equipment sends registration request information to the access management network element of the hosting network.

In a possible implementation, the registration request message includes an NSI based SUPI.

S1010: The AAA-S completes user authentication of the terminal equipment.

In a possible implementation, after receiving the registration request information of the terminal equipment, the access management network element of the hosting network selects an authentication server of the hosting network, then the authentication server selects an NSSAAF, and the NSSAAF selects the AAA-S based on the NSI based SUPI of the terminal equipment. The AAA-S completes the user authentication on the terminal equipment.

S1011: The access management network element obtains the subscription profile of the terminal equipment from the first network element.

In a possible implementation, the subscription profile includes the service information that is of the hosting network and that is subscribed to by the UE.

S1012: Complete a registration process.

S1013: Update configuration of the terminal equipment, including updating, via a registration response message, a UCU procedure, or a UPU procedure, the service information that is of the hosting network and that is subscribed to by the UE or network selection information.

In a possible implementation, updated configuration information includes allowed NSSAI.

In another possible implementation, updated configuration information includes a URSP.

S1014: Perform hosting network service authentication on the terminal equipment based on a selected authentication mode included in the service information that is of the terminal equipment and that is subscribed to by the UE.

According to the network capability exposure method in this embodiment of this application, after a third-party partner user of the hosting network subscribes to the service of the hosting network, information configuration of the terminal equipment and information such as a subscription of the terminal equipment in the hosting network are updated, so that access control is performed for subsequent UE selection, accessing the hosting network, and accessing the service of the hosting network, so that the terminal equipment completes accessing the hosting network and may use the service of the subscribed hosting network.

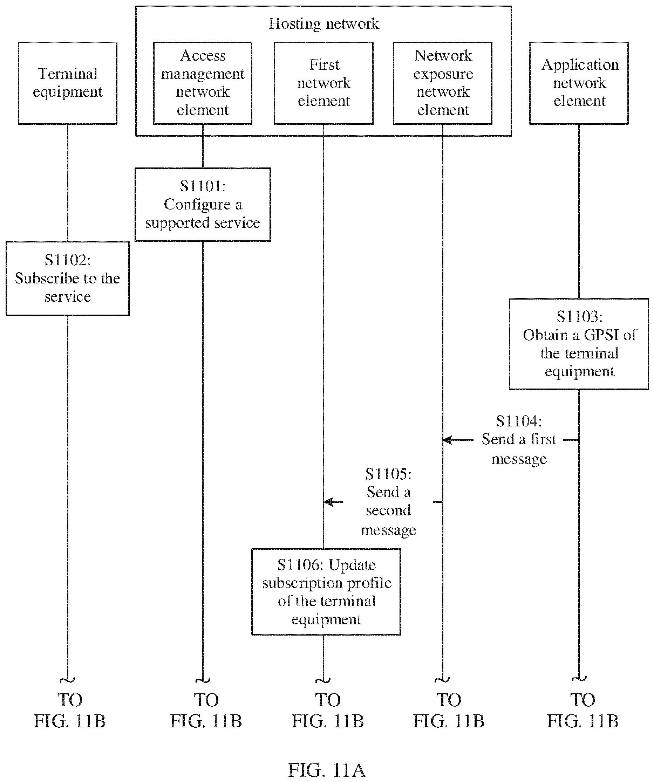

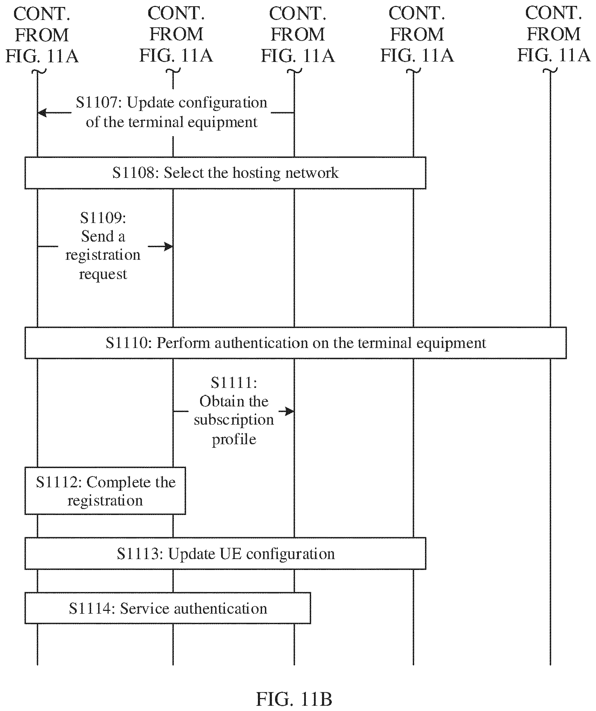

In the application scenario in FIG. 11A and FIG. 11B, terminal equipment that subscribes to a service of a hosting network is a local user of the hosting network, the hosting network stores a service subscription of the terminal equipment, performs user authentication, and an application network element performs service authentication.

It should be noted that the local user of the hosting network herein refers to terminal equipment user that has subscription data of the hosting network, that is, a home network is the hosting network. In a process of subscribing to the service of the hosting network, network selection information of the terminal equipment does not need to be updated on a unified data management network element, a unified data repository network element, or the terminal equipment of the hosting network.

S1101: The hosting network configures a supported service.

S1102: The terminal equipment subscribes to the service.

S1103. An application network element obtains a GPSI of the terminal equipment and service information that is of the hosting network and that is subscribed to by the terminal equipment.

S1104: The application network element sends a first message to a network exposure network element of the hosting network.

In some embodiments, the first message is used to request to update or store the service information that is of the hosting network and that is subscribed to by the terminal equipment.

S1105: The network exposure network element of the hosting network sends a second message to a first network element.

In some embodiments, the second message is used to request to update subscription profile of the terminal equipment.

In some embodiments, the first network element may be a unified data management network element or a unified data repository network element.

S1106: The first network element updates the subscription profile of the terminal equipment.

S1107: The first network element configures information such as a network selection parameter and a service parameter on the terminal equipment by using a control plane.

In a possible implementation, the control plane manner may be a UPU.

In another possible implementation, the control plane manner may be SoR.

Optionally, the information such as the network selection parameter and the service parameter may alternatively be configured on the terminal equipment by the application network element in a control plane or user plane manner.

In a possible implementation, the application network element sends UE information (the network selection parameter and the service parameter) to an access management network element, and the access management network element configures the UE information for the UE via a NAS message.

In another possible implementation, the application network element configures UE information (the network selection parameter and the service parameter) for the UE in a user plane manner.

S1108: The terminal equipment selects the hosting network based on the configured service parameter and network selection parameter and broadcast information of the hosting network.

S1109: The terminal equipment sends registration request information to the access management network element of the hosting network.

In a possible implementation, the registration request message includes a native SUPI subscribed to by the terminal equipment on the hosting network, and the native SUPI may be an NSI based SUPI or an IMSI based SUPI.

S1110: The access management network element of the hosting network selects, based on the SUPI of the terminal equipment, an authentication server of the hosting network and the unified data management network element to perform primary authentication.

Optionally, the authentication server and the unified data management network element may obtain a location of the UE, and verify the UE based on the location of the UE, access time, and an effective area and effective time of the hosting network service that is subscribed to by the UE.

S1111: The access management network element obtains the subscription profile of the terminal equipment from the first network element.

In a possible implementation, the subscription profile includes the service information that is of the hosting network and that is subscribed to by the UE.

S1112: Complete a registration process.

S1113: Update configuration of the terminal equipment, including updating, via a registration response message, a UCU procedure, or a UPU procedure, the service information of the hosting network or network selection information.

In a possible implementation, updated configuration information includes allowed NSSAI.

In another possible implementation, updated configuration information includes a URSP.

S1114: Perform hosting network service authentication on the terminal equipment based on a selected authentication mode included in the service information that is of the terminal equipment and that is subscribed to by the UE.

According to the network capability exposure method in this embodiment of this application, after a local user of the hosting network subscribes to the service of the hosting network, information configuration of the terminal equipment and information such as a subscription of the terminal equipment in the hosting network are updated, so that access control is performed for subsequent UE selection, accessing the hosting network, and accessing the service of the hosting network, so that the terminal equipment completes accessing the hosting network and may use the service of the subscribed hosting network.

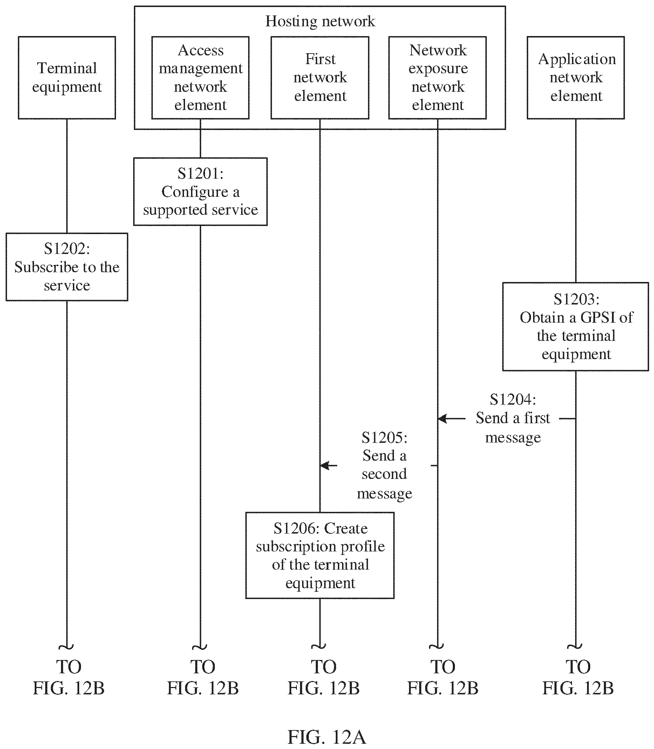

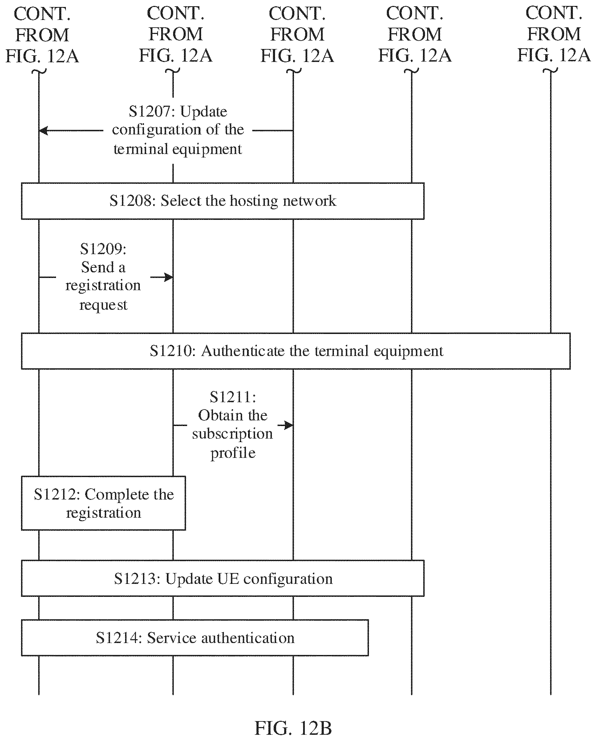

In the application scenario in FIG. 12A and FIG. 12B, terminal equipment that subscribes to a service of a hosting network is a non-partner user, the hosting network stores a service subscription of the terminal equipment, performs user authentication, and an application network element performs service authentication.

It should be noted that, the non-partner user herein may be a user of a mobile network operator or a third-party user that does not cooperate with the hosting network, and the hosting network cannot use a subscribed operator of the non-partner user or the third party to perform user authentication on the terminal equipment.

S1201: The hosting network configures a supported service.

S1202: The terminal equipment subscribes to the service.

S1203: An application network element obtains a GPSI of the terminal equipment and service information that is of the hosting network and that is subscribed to by the terminal equipment.

S1204: The application network element sends a first message to a network exposure network element of the hosting network.

In some embodiments, the first information is used to request to store the service information that is of the hosting network and that is subscribed to by the terminal equipment.

In a possible implementation, the first message herein includes a new native SUPI, a network access credential, and a network selection parameter that are configured for the terminal equipment (the non-partner user) by the hosting network.

S1205: The network exposure network element of the hosting network sends a second message to a first network element.

In some embodiments, the second message is used to request to create subscription profile of the terminal equipment.

In some embodiments, the first network element may be a unified data management network element or a unified data repository network element.

S1206: The first network element creates the subscription profile of the terminal equipment.

S1207: The first network element configures information such as the native SUPI, the network access credential, the network selection parameter, and the service parameter on the terminal equipment by using the control plane.

In a possible implementation, the control plane manner may be a UPU.

In another possible implementation, the control plane manner may be SoR.

Optionally, the information such as the native SUPI, the network access credential, the network selection parameter and the service parameter may alternatively be configured on the terminal equipment by the application network element in a control plane or user plane manner.

In a possible implementation, the application network element sends UE information (the native SUPI, the network access credential, the network selection parameter and the service parameter) to an access management network element, and the access management network element configures the UE information for the UE via a NAS message.

In another possible implementation, the application network element configures the UE information (the native SUPI, the network access credential, the network selection parameter and the service parameter) for the UE in a user plane manner.

S1208: The terminal equipment selects the hosting network based on the configured service parameter and network selection parameter and broadcast information of the hosting network.

S1209: The terminal equipment sends registration request information to the access management network element of the hosting network.

In a possible implementation, the registration request message herein includes a native SUPI configured by the terminal equipment for the non-partner user in the hosting network, namely, the SUPI obtained in step S1207, and the SUPI may be an NSI based SUPI or an IMSI based SUPI.

S1210: The access management network element of the hosting network selects, based on the SUPI of the terminal equipment, an authentication server of the hosting network and the unified data management function network element to perform primary authentication.

Optionally, the authentication server and the unified data management network element may obtain a location of the UE, and verify the UE based on the location of the UE, access time, and an effective area and effective time of the hosting network service that is subscribed to by the UE.

S1211: The hosting network obtains the subscription profile of the terminal equipment from the first network element of the hosting network.

In a possible implementation, the subscription profile includes the service information that is of the hosting network and that is subscribed to by the UE.

S1212: Complete a registration process.

S1213: Update configuration of the terminal equipment, including updating, via a registration response message, a UCU procedure, or a UPU procedure, the service information of the hosting network.

In a possible implementation, updated configuration information includes allowed NSSAI.

In another possible implementation, updated configuration information includes a URSP.

S1214: Perform hosting network service authentication on the terminal equipment based on a selected authentication mode included in the service information that is of the terminal equipment and that is subscribed to by the UE.

According to the network capability exposure method in this embodiment of this application, after a non-partner user subscribes to the service of the hosting network, information configuration update of the terminal equipment and new creation of new subscription profile of terminal equipment in the hosting network, so that access control is performed for subsequent UE selection, accessing the hosting network, and accessing the service of the hosting network, so that the terminal equipment completes accessing the hosting network and may use the service of the subscribed hosting network.

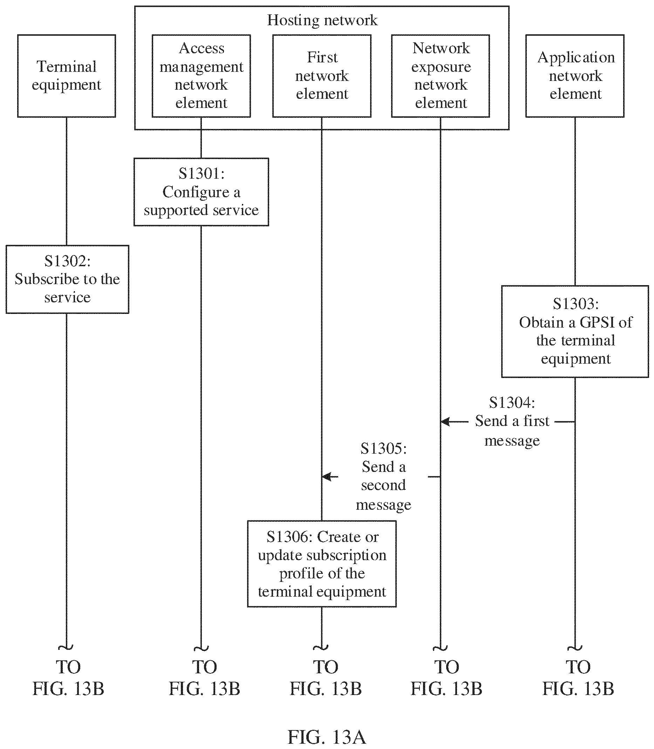

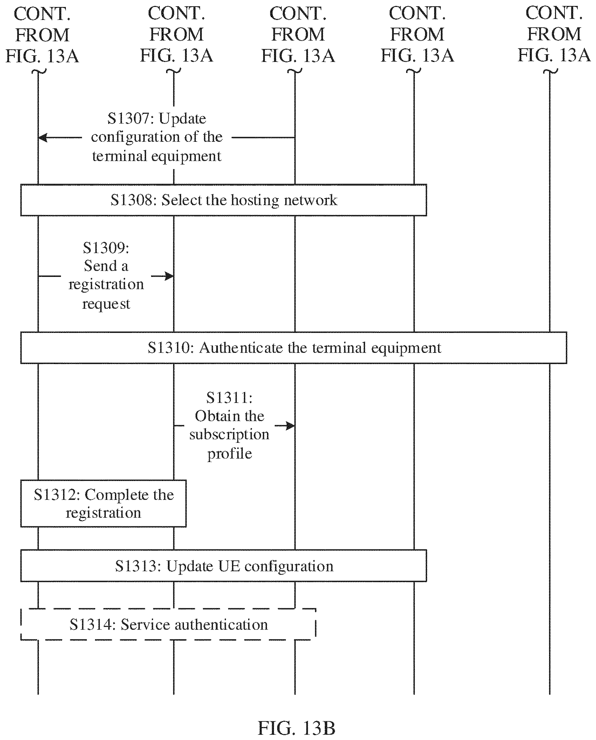

In the application scenario in FIG. 13A and FIG. 13B, terminal equipment that subscribes to a service of a hosting network is a non-partner user, the hosting network stores a service subscription of the terminal equipment, and an application network element performs user authentication and service authentication.

It should be noted that, the non-partner user herein may be a user of a mobile network operator or a third party that does not cooperate with the hosting network, and the hosting network cannot use a subscribed operator of the non-partner user or the third party to perform user authentication on the terminal equipment.

S1301: The hosting network configures a supported service.

51302: The terminal equipment subscribes to the service.

S1303: An application network element obtains a GPSI of the terminal equipment and service information that is of the hosting network and that is subscribed to by the terminal equipment.

S1304: The application network element sends a first message to a network exposure network element of the hosting network.

In some embodiments, the first message is used to request to store the service information that is of the hosting network and that is subscribed to by the terminal equipment.

In a possible implementation, the first message includes a new NSI based SUPI, a network access credential, and a network selection parameter that are configured by the hosting network for the non-partner user.

S1305: The network exposure network element of the hosting network sends a second message to a first network element.

In some embodiments, the second message is used to request to update or create subscription profile of the terminal equipment.

In some embodiments, the first network element may be a unified data management network element or a unified data repository network element.

S1306: The first network element updates or creates the subscription profile of the terminal equipment.

S1307: The first network element configures information such as the NSI based SUPI, the network access credential, the network selection parameter, and the service parameter on the terminal equipment by using a control plane.

In a possible implementation, the control plane manner may be a UPU.

In another possible implementation, the control plane manner may be SoR.

Optionally, the information such as the NSI based SUPI, the network access credential, the network selection parameter and the service parameter may alternatively be configured on the terminal equipment by the application network element in a control plane or user plane manner.

In a possible implementation, the application network element sends UE information (the NSI based SUPI, the network access credential, the network selection parameter and the service parameter) to an access management network element, and the access management network element configures the UE information for the UE via a NAS message.

In another possible implementation, the application network element configures the UE information (the NSI based SUPI, the network access credential, the network selection parameter and the service parameter) for the UE in a user plane manner.

S1308: The terminal equipment selects the hosting network based on the configured service parameter and network selection parameter and broadcast information of the hosting network.

S1309: The terminal equipment sends registration request information to the access management network element of the hosting network.

In a possible implementation, the registration request message includes an NSI based SUPI configured by the terminal equipment for the non-partner user in the hosting network.

S1310: The access management network element of the hosting network performs primary authentication on the terminal equipment.

In a possible implementation, the access management network element of the hosting network interacts with the application network element via an authentication server of the hosting network and an NSSAAF, to perform primary authentication on the terminal equipment.

Optionally, the authentication server and the unified data management network element may obtain a location of the UE, and verify the UE based on the location of the UE, access time, and an effective area and effective time of the hosting network service that is subscribed to by the UE.

In another possible implementation, service authentication may be performed on the terminal equipment at the same time during primary authentication.

S1311: The hosting network obtains the subscription profile of the terminal equipment from the first network element of the hosting network.

In a possible implementation, the subscription profile includes the service information that is of the hosting network and that is subscribed to by the UE.

S1312: Complete a registration process.

S1313: Update configuration of the terminal equipment, including updating, via a registration response message, a UCU procedure, or a UPU procedure, the service information of the hosting network.

In a possible implementation, updated configuration information includes allowed NSSAI.

In another possible implementation, updated configuration information includes a URSP.

S1314: Optionally, perform hosting network service authentication on the terminal equipment based on a selected authentication mode included in the service information that is of the terminal equipment and that is subscribed to by the UE.

It should be understood that, when the primary authentication is performed on the terminal equipment in S1310, the service authentication is also performed, S1314 may not be performed.

According to the network capability exposure method in this embodiment of this application, after the non-partner user subscribes to the service of the hosting network, information configuration update of the terminal equipment and new creation of new subscription profile of terminal equipment or a subscribed update in the hosting network, so that access control is performed for subsequent UE selection, accessing the hosting network, and accessing the service of the hosting network, so that the terminal equipment completes accessing the hosting network and may use the service of the subscribed hosting network.

Based on an invention concept that is the same as that in the foregoing method embodiments, an embodiment of this application further provides a communication apparatus. The communication apparatus may have functions of an application network element, a network exposure network element, a first network element, and an authentication server in the foregoing method embodiments, and may be configured to perform steps performed by a function of the application network element, the network exposure network element, the first network element, or the authentication server in the foregoing method embodiment. The function may be implemented by hardware, or may be implemented by software or by hardware executing corresponding software. The hardware or software includes one or more modules corresponding to the foregoing functions.

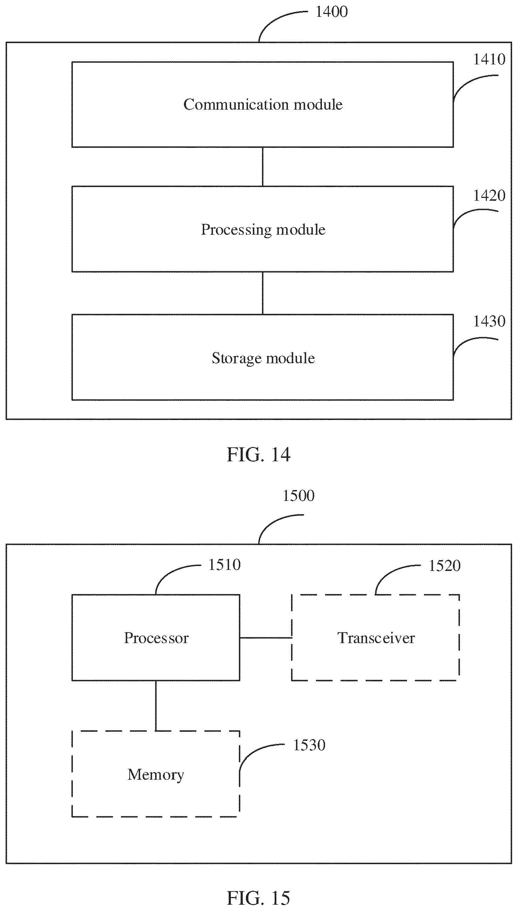

In a possible implementation, a communication apparatus 1400 shown in FIG. 14 may serve as the application network element in the foregoing method embodiment, and perform steps performed by the application network element in the foregoing method embodiment.

As shown in FIG. 14, the communication apparatus 1400 may include a communication module 1410 and a processing module 1420. The communication module 1410 and the processing module 1420 are coupled to each other.

The communication module 1410 may be configured to support the communication apparatus 1400 in performing communication, for example, perform a sending and/or receiving action performed by the application network element in S410, S720, S804, S809, S811, S814, S815, S904, S906, S907, S909, S912, S913, S1004, S1010, S1104, 51110, S1204, S1210, S1304, and S1310 in FIG. 4, FIG. 7, FIG. 8A and FIG. 8B, FIG. 9, FIG. 10A and FIG. 10B, FIG. 11A and FIG. 11B, FIG. 12A and FIG. 12B, and FIG. 13A and FIG. 13B.

The processing module 1420 may be configured to support the communication apparatus 1400 in performing processing actions in the foregoing method embodiments, for example, performing a processing action performed by the application network element in S730, S803, S809, S811, S814, S815, S903, S907, S909, S912, S913, S1003, S1010, S1103, S1110, S1203, S1210, S1303, S1310, or the like in FIG. 7, FIG. 8A and FIG. 8B, FIG. 9, FIG. 10A and FIG. 10B, FIG. 11A and FIG. 11B, FIG. 12A and FIG. 12B, and FIG. 13A and FIG. 13B.

In another possible implementation, the communication apparatus 1400 shown in FIG. 14 may serve as the network exposure network element in the foregoing method embodiment, and perform steps performed by the network exposure network element in the foregoing method embodiment.

As shown in FIG. 14, the communication apparatus 1400 may include a communication module 1410 and a processing module 1420. The communication module 1410 and the processing module 1420 are coupled to each other.

The communication module 1410 may be configured to support the communication apparatus 1400 in performing communication, for example, perform a sending and/or receiving action performed by the network exposure network element in S410, S430, S804, S806, S811, S814, S1004, S1005, S1008, S1010, S1013, S1104, S1105, S1108, S1110, S1113, S1204, S1205, S1208, S1210, S1213, S1304, S1305, S1308, S1310, or S1313 in FIG. 4, FIG. 8A and FIG. 8B, FIG. 10A and FIG. 10B, FIG. 11A and FIG. 11B, FIG. 12A and FIG. 12B, and FIG. 13A and FIG. 13B.

The processing module 1420 may be configured to support the communication apparatus 1400 in performing processing actions in the foregoing method embodiments, for example, performing a processing action performed by the network exposure network element in S420, S805, S811, S814, S1008, S1010, S1013, S1108, S1110, S1113, S1208, S1210, S1213, S1308, S1310, S1313, or the like in FIG. 4, FIG. 8A and FIG. 8B, FIG. 10A and FIG. 10B, FIG. 11A and FIG. 11B, FIG. 12A and FIG. 12B, and FIG. 13A and FIG. 13B.

In still another possible implementation, the communication apparatus 1400 shown in FIG. 14 may serve as the first network element in the foregoing method embodiment, and perform steps performed by the first network element in the foregoing method embodiment.

As shown in FIG. 14, the communication apparatus 1400 may include a communication module 1410 and a processing module 1420. The communication module 1410 and the processing module 1420 are coupled to each other.

The communication module 1410 may be configured to support the communication apparatus 1400 in performing communication, for example, perform a sending and/or receiving action performed by the first network element in S430, S450, S520, S620, S630, S806, S808, S811, S812, S814, S1005, S1007, S1008, S1010, S1011, S1013, S1014, S1105, S1107, S1108, S1110, 51111, S1113, S1114, S1205, S1207, S1208, S1210, S1211, S1213, S1214, S1305, S1307, S1308, S1310, S1311, S1313 or S1314, in FIG. 4, FIG. 5, FIG. 6, FIG. 8A and FIG. 8B, FIG. 10A and FIG. 10B, FIG. 11A and FIG. 11B, FIG. 12A and FIG. 12B, and FIG. 13A and FIG. 13B.

The processing module 1420 may be configured to support the communication apparatus 1400 in performing processing actions in the foregoing method embodiments, for example, performing a processing action in S440, S530, S807, S811, S814, S1006, S1008, S1010, S1013, S1014, S1106, S1108, S1110, S1113, S1114, S1206, S1208, S1210, S1213, S1214, S1306, S1308, S1310, S1313, S1314, or the like in FIG. 4, FIG. 5, FIG. 8A and FIG. 8B, FIG. 10A and FIG. 10B, FIG. 11A and FIG. 11B, FIG. 12A and FIG. 12B, and FIG. 13A and FIG. 13B that are performed by the first network element.

In still another possible implementation, the communication apparatus 1400 shown in FIG. 14 may serve as the authentication server in the foregoing method embodiment, and perform steps performed by the authentication server in the foregoing method embodiment.

As shown in FIG. 14, the communication apparatus 1400 may include a communication module 1410 and a processing module 1420. The communication module 1410 and the processing module 1420 are coupled to each other.

The communication module 1410 may be configured to support the communication apparatus 1400 in performing communication, for example, performing a sending and/or receiving action that is performed by the authentication server in S510, S520, S610, S620, S630, S710, or S720 in FIG. 5, FIG. 6, and FIG. 7.

The processing module 1420 may be configured to support the communication apparatus 1400 in performing the processing action in the foregoing method embodiment, for example, performing a processing action performed by the authentication server in S640 in FIG. 6.

Optionally, the communication apparatus 1400 may further include a storage module 1430, configured to store program code and data of the communication apparatus 1400.

FIG. 15 is a schematic block diagram of a communication device 1500 according to an embodiment of this application. As shown in the figure, the communication device 1500 includes at least one processor 1510 and a transceiver 1520. The processor 1510 is coupled to a memory, and is configured to execute instruction stored in the memory, to control the transceiver 1520 to send a signal and/or receive a signal.

Optionally, the communication device 1500 further includes a memory 1530, configured to store instructions.

In some embodiments, the processor 1510 and the memory 1530 may be combined into one processing apparatus, and the processor 1510 is configured to execute program code stored in the memory 1530 to implement the foregoing functions. In specific implementation, the memory 1530 may alternatively be integrated into the processor 1510, or be independent of the processor 1510.

In some embodiments, the transceiver 1520 may include a receiver (or referred to as a receive machine) and a transmitter (or referred to as a transmit machine).

The transceiver 1520 may further include one or more antennas. The transceiver 1520 may be a communication interface or an interface circuit.

When the communication device 1500 is a chip, the chip includes a transceiver unit and a processing unit. The transceiver unit may be an input/output circuit or a communication interface. The processing unit may be a processor integrated on the chip, a microprocessor, or an integrated circuit.

In an implementation process, the steps of the method may be implemented by using an integrated logic circuit of hardware in the processor or an instruction in a form of software. Steps of the methods disclosed with reference to embodiments of this application may be directly executed and accomplished by using a hardware processor, or may be executed and accomplished by using a combination of hardware and software modules in the processor. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory, and completes the steps of the foregoing method in combination with hardware of the processor. To avoid repetition, details are not described herein again.

An embodiment of this application further provides a computer-readable storage medium. The computer-readable storage medium stores computer instructions used to implement the method performed by the communication device in the foregoing method embodiments.

For example, when the computer program is executed by a computer, the computer can implement the method performed by the communication device in the foregoing method embodiment.

For explanation and beneficial effects of related content in any apparatus provided above, refer to the corresponding method embodiment provided above. Details are not described herein again.

It should be understood that the processor mentioned in embodiments of this application may be a central processing unit (central processing unit, CPU), or may be another general-purpose processor, a digital signal processor (digital signal processor, DSP), or an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), electrically erasable programmable read-only memory (electrically EPROM, EEPROM), or flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should also be noted that the memory described herein is intended to include, but is not limited to, these and any other suitable type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A network capability exposure method, comprising:
sending, by an application network element, a first message to a network exposure network element, wherein the first message is used to request to update or store service information that is of a hosting network and that is subscribed to by terminal equipment, and the first message comprises the service information; and
receiving, by the application network element, an indication message sent by the network exposure network element, wherein the indication message indicates whether to update or store the service information.

2. The method according to claim 1, wherein before the sending, by an application network element, a first message, the method further comprises:
obtaining, by the application network element, the service information.

3. The method according to claim 1, wherein before the sending, by an application network element, a first message, the method further comprises:
obtaining, by the application network element, one or more of the following information:
identification information of the terminal equipment, information about the hosting network,
cooperation model, a subscription permanent identifier, a network access credential, and network selection information.

4. The method according to any one of claims 1 to 3, wherein the method further comprises:
configuring, by the application network element, the service information for the terminal equipment in a control plane or user plane manner.

5. A network capability exposure method, comprising:
receiving, by a network exposure network element, a first message sent by an application network element, wherein the first message is used to request to update or store service information that is of a hosting network and that is subscribed to by terminal equipment, and the first message comprises the service information; and
sending, by the network exposure network element, a second message to a first network element, wherein the second message is used to request to update or create subscription profile of the terminal equipment.

6. The method according to claim 5, wherein before the sending, by the network exposure network element, a second message to a first network element, the method further comprises:
authenticating, by the network exposure network element according to a service protocol, the first message sent by the application network element, and sending, by the network exposure network element, the second message to the first network element after the authentication succeeds.

7. The method according to claim 1 or 5, wherein the first message further comprises identification information of the terminal equipment, the identification information identifies the terminal equipment that subscribes to a function service of the hosting network, and the second message further comprises the identification information.

8. The method according to claim 1 or 5, wherein the first message further comprises a subscription permanent identifier and a network access credential, the subscription permanent identifier and the network access credential are used to perform initial authentication on the terminal equipment to access the hosting network, and the second message further comprises the subscription permanent identifier and the network access credential.

9. The method according to claim 1 or 5, wherein the first message further comprises network selection information, the network selection information is used by the terminal equipment to select the hosting network, and the second message further comprises the network selection information.

10. The method according to any one of claims 5 to 9, wherein the network exposure network element is located in the hosting network or in a home network of the terminal equipment.

11. A network capability exposure method, comprising:
receiving, by a first network element, a second message sent by a network exposure network element, wherein the second message is used to request to update or create subscription profile of terminal equipment, the second message comprises service information that is of a hosting network and that is subscribed to by the terminal equipment, and the first network element is a unified data management network element or a unified data repository network element; and
updating or creating, by the first network element, the subscription profile of the terminal equipment, wherein the subscription profile of the terminal equipment comprises the service information.

12. The method according to claim 1, 5, or 11, wherein the service information comprises one or more of the following information: a service description, a service parameter, an authentication mode, an access mode, effective time, an effective area, and a service credential, wherein
the service description identifies a service that the terminal equipment accesses the hosting network;
the service parameter indicates a related network parameter of the service that the terminal equipment accesses the hosting network;
the authentication mode indicates an authentication or authorization method for the service that the terminal equipment accesses the hosting network;
the access mode indicates a routing manner of the service that the terminal equipment accesses the hosting network;
the effective time indicates time information that the terminal equipment can use the service of the hosting network;
the effective area indicates location information that the terminal equipment can use the service of the hosting network; and
the service credential is used to authenticate the service that the terminal equipment accesses the hosting network.

13. The method according to claim 12, wherein
the authentication mode further comprises an address of an authentication server, and the authentication server is configured to perform service authentication.

14. The method according to claim 12, wherein the access mode is an overlay mode and an underlay mode, and the access mode further comprises an address of a non-3GPP interworking function network element.

15. The method according to claim 5 or 11, wherein when the second message is used to request to create the subscription profile of the terminal equipment, the second message further comprises a subscription permanent identifier and a network access credential.

16. The method according to any one of claims 11 to 15, wherein the second message further comprises network selection information, and the network selection information is used by the terminal equipment to select the hosting network.

17. The method according to any one of claims 11 to 16, wherein the method further comprises:
configuring, by the first network element, the service information and/or the network selection information for the terminal equipment in a control plane manner.

18. The method according to any one of claims 11 to 17, wherein the first network element is the unified data management network element, and the method further comprises:
receiving, by the first network element, a terminal equipment authentication request message sent by the authentication server; and
determining, by the first network element based on the effective time in the service information, whether to reject a terminal equipment authentication request, wherein the authentication request message comprises the time information of the terminal equipment; or
determining, by the first network element based on the effective area in the service information, whether to reject a terminal equipment authentication request, wherein the authentication request message comprises the location information of the terminal equipment; or
determining, by the first network element based on the effective time and/or the effective area in the service information, whether to reject a terminal equipment authentication request, wherein the authentication request message comprises the time information and the location information of the terminal equipment.

19. The method according to any one of claims 11 to 17, wherein the first network element is the unified data management network element, and the method further comprises:
sending, by the first network element, a third message to the authentication server, wherein the third message comprises the effective time and the effective area in the service information that is of the hosting network and that is subscribed to by the terminal equipment.

20. The method according to any one of claims 11 to 19, wherein the first network element is located in the hosting network or in a home network of the terminal equipment.

21. A network capability exposure method, comprising:
receiving, by an authentication server, a terminal equipment authentication request message sent by an access management network element, wherein the terminal equipment authentication request message comprises time information and/or location information of terminal equipment;
sending, by the authentication server, the terminal equipment authentication request message to a unified data management network element;
receiving, by the authentication server, a third message sent by the unified data management network element, wherein the third message comprises service information that is of a hosting network and that is subscribed to by the terminal equipment; and
determining, by the authentication server based on the third message, whether to reject a terminal equipment authentication request.

22. The method according to claim 21, wherein the determining whether to reject a terminal equipment authentication request comprises:
determining, by the authentication server based on effective time and an effective area comprised in the service information, whether to reject the terminal equipment authentication request, wherein the service information comprises the effective time and/or the effective area.

23. The method according to claim 21 or 22, wherein the authentication server is located in the hosting network or in a home network of the terminal equipment.

24. A communication system, comprising an application network element, a network exposure network element, a first network element, and an authentication server, wherein the application network element is configured to perform the method according to any one of claims 1 to 4, the network exposure network element is configured to perform the method according to any one of claims 5 to 10, the first network element is configured to perform the method according to any one of claims 11 to 20, and the authentication server is configured to perform the method according to any one of claims 21 to 23.

25. A communication apparatus, comprising a module configured to implement the method according to any one of claims 1 to 23.

26. A communication apparatus, comprising:
a processor, configured to execute computer instructions stored in a memory, so that the apparatus performs the method according to any one of claims 1 to 23.

27. A computer-readable storage medium, wherein the computer-readable storage medium stores a computer program, and when the computer program is executed by a computer, the computer is enabled to perform the method according to any one of claims 1 to 23.

28. A computer program product, wherein the computer program product comprises computer program code, and when the computer program code is run on a computer, the method according to any one of claims 1 to 23 is performed.

29. A chip, wherein the chip comprises a processor configured to read instructions stored in a memory, and when the processor executes the instructions, the chip is enabled to implement the method according to any one of claims 1 to 23.
